# EUROPEAN PATENT APPLICATION

(11) **EP 3 975 146 A1**
(43) Date of publication of application: **30.03.2022**
(21) Application number: 20809898.8
(22) Date of filing: 08.05.2020
(51) Int. Cl.: G07G 1/12, G06Q 20/32, G06Q 20/34, G07B 15/00

(54) **INFORMATION PROCESSING DEVICE, INFORMATION PROCESSING TERMINAL, INFORMATION PROCESSING METHOD, AND PROGRAM**

(30) Priority: 21.05.2019 JP 2019095323
(71) Applicant: Sony Group Corporation, Tokyo 108-0075 (JP)
(72) Inventor: HIURA Yuji, Tokyo 108-0075 (JP); SUEYOSHI Masahiro, Tokyo 108-0075 (JP); SAKABAYASHI Takayuki, Tokyo 108-0075 (JP)
(74) Representative: D Young & Co LLP
(86) International application number: PCT/JP2020/018618
(87) International publication number: WO 2020/235353

(57) **Abstract**

The present disclosure relates to an information processing device, an information processing terminal, an information processing method, and a program capable of further enhancing convenience of a settlement service.

Acquired are an upper limit amount set as an upper limit for payment at a time of purchase of a desired product or service, and identification information assigned to a card used when the payment is made. Then, performed is processing of associating the identification information with and recording the upper limit amount on continuous settlement information that continuously records information regarding a settlement for a payment. The present technology can be applied to, for example, an information processing system that provides a settlement service.

## Description

### TECHNICAL FIELD

The present disclosure relates to an information processing device, an information processing terminal, an information processing method, and a program, and more particularly, to an information processing device, an information processing terminal, an information processing method, and a program capable of further enhancing convenience of a settlement service.

### BACKGROUND ART

Conventionally, various settlement services using an information processing terminal such as a so-called smartphone, a card on which an integrated circuit (IC) chip is mounted, or the like have been provided.

For example, Patent Document 1 discloses an information processing system capable of limiting uses of expenses on the basis of limit information indicating a limit of a product purchased by a user or a service used by the user.

### CITATION LIST

### PATENT DOCUMENT

Patent Document 1: Japanese Patent Application Laid-Open No. 2016-38814

### SUMMARY OF THE INVENTION

### PROBLEMS TO BE SOLVED BY THE INVENTION

Incidentally, conventional settlement services do not assume use with a management method in which a card is associated, or use by previously setting a right to purchase and associating a card with the right, and such use is required for enhancing convenience of a settlement service.

The present disclosure has been made to solve the problems mentioned above, and an object of the present disclosure is to further enhance convenience of a settlement service.

### SOLUTIONS TO PROBLEMS

An information processing device according to a first aspect of the present disclosure is an information processing device including an acquisition unit that acquires an upper limit amount set as an upper limit for payment at a time of purchase of a desired product or service, and identification information assigned to a payment object used when the payment is made, and a continuous settlement information processing unit that performs processing of associating the identification information with and recording the upper limit amount on continuous settlement information that continuously records information regarding a settlement for the payment.

An information processing method or program according to the first aspect of the present disclosure includes acquiring an upper limit amount set as an upper limit for payment at a time of purchase of a desired product or service, and identification information assigned to a payment object used when the payment is made, and
performing processing of associating the identification information with and recording the upper limit amount on continuous settlement information that continuously records information regarding a settlement for the payment.

In the first aspect of the present disclosure, an upper limit amount set as an upper limit for payment at a time of purchase of a desired product or service, and identification information assigned to a payment object used when the payment is made are acquired, and processing of associating the identification information with and recording the upper limit amount on continuous settlement information that continuously records information regarding settlement for the payment is performed.

An information processing terminal according to a second aspect of the present disclosure includes an acquisition unit that acquires an upper limit amount set as an upper limit for payment at a time of purchase of a desired product or service, and identification information assigned to a payment object used when the payment is made, and a request unit that requests an information processing device that makes a settlement as a proxy by using the payment object to perform processing of associating the identification information with and recording the upper limit amount on continuous settlement information that continuously records information regarding a settlement for the payment.

An information processing method or program according to the second aspect of the present disclosure includes acquiring an upper limit amount set as an upper limit for payment at a time of purchase of a desired product or service, and identification information assigned to a payment object used when the payment is made, and requesting an information processing device that makes a settlement as a proxy by using the payment object to perform processing of associating the identification information with and recording the upper limit amount on continuous settlement information that continuously records information regarding a settlement for the payment.

In the second aspect of the present disclosure, an upper limit amount set as an upper limit for payment at a time of purchase of a desired product or service, and identification information assigned to a payment object used when the payment is made are acquired, and an information processing device that makes a settlement as a proxy by using the payment object is requested to perform processing of associating the identification information with and recording the upper limit amount on continuous settlement information that continuously records information regarding a settlement for the payment.

### BRIEF DESCRIPTION OF DRAWINGS

Fig. 1 is a block diagram illustrating a configuration example of an embodiment of an information processing system to which the present technology is applied.
Fig. 2 is a block diagram illustrating a configuration example of a user terminal.
Fig. 3 is a block diagram illustrating a configuration example of a card.
Fig. 4 is a block diagram illustrating another configuration example of a card.
Fig. 5 is a block diagram illustrating a configuration example of an inductive tag.
Fig. 6 is a block diagram illustrating a configuration example of an authentication settlement proxy server.
Fig. 7 is a block diagram illustrating a configuration example of a service provider server.
Fig. 8 is a block diagram illustrating a configuration example of a settlement account server.
Fig. 9 is a block diagram illustrating a configuration example of an entrance gate device.
Fig. 10 is a block diagram illustrating a configuration example of a shop device.
Fig. 11 is a diagram illustrating a display example of a service provider top page screen.
Fig. 12 is a diagram illustrating a display example of a settlement account login screen.
Fig. 13 is a diagram illustrating a display example of a ticket list screen.
Fig. 14 is a diagram illustrating a display example of a settlement account list screen.
Fig. 15 is a diagram illustrating a display example of a purchased ticket ID screen.
Fig. 16 is a diagram illustrating a display example of a purchased ticket ID list screen.
Fig. 17 is a diagram illustrating a display example of a continuous settlement information screen.
Fig. 18 is a diagram illustrating a display example of a product list screen.
Fig. 19 is a diagram illustrating a display example of a purchased ticket ID/settlement number/purchasable amount screen.
Fig. 20 is a diagram illustrating a display example of a continuous settlement information list screen.
Fig. 21 is a diagram illustrating a display example of a continuous settlement information list (update) screen.
Fig. 22 is a diagram illustrating a display example of a continuous settlement information (update) screen.
Fig. 23 is a diagram for describing continuous settlement information.
Fig. 24 is a flowchart describing application activation processing.
Fig. 25 is a flowchart describing ticket purchase processing and continuous settlement approval processing.
Fig. 26 is a flowchart describing the ticket purchase processing and the continuous settlement approval processing.
Fig. 27 is a flowchart describing the ticket purchase processing and the continuous settlement approval processing.
Fig. 28 is a flowchart describing card association processing.
Fig. 29 is a flowchart describing the card association processing.
Fig. 30 is a flowchart describing entrance gate passage processing.
Fig. 31 is a flowchart describing product purchase processing at a shop.
Fig. 32 is a flowchart describing the product purchase processing at a shop.
Fig. 33 is a flowchart describing balance reference processing for upper limit amount.
Fig. 34 is a flowchart describing limit update processing.
Fig. 35 is a flowchart describing the limit update processing.
Fig. 36 is a block diagram illustrating a configuration example of an embodiment of a computer to which the present technology is applied.

### MODE FOR CARRYING OUT THE INVENTION

Hereinafter, a specific embodiment to which the present technology is applied will be described in detail with reference to the drawings.

### <Configuration example of information processing system>

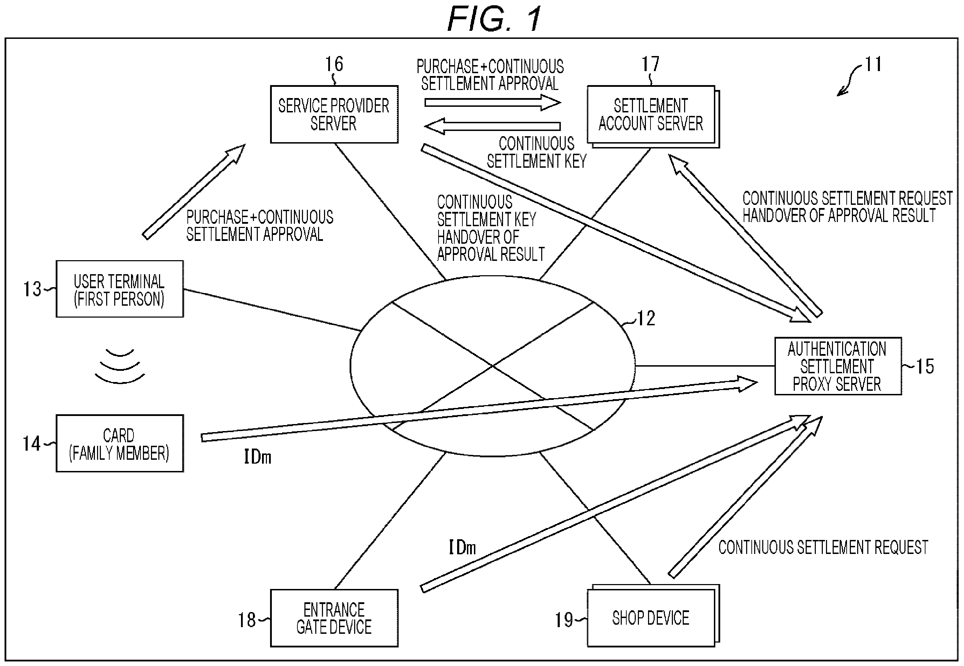

Fig. 1 is a block diagram illustrating a configuration example of an embodiment of an information processing system to which the present technology is applied.

For example, an information processing system 11 illustrated in Fig. 1 is assumed to be used in a settlement service in a limited place such as a theme park having an entrance gate or a shop. Then, the information processing system 11 enables use of the settlement service not only by a user himself/herself registered with the settlement service, but also by a family member of the user, thereby enhancing convenience of the settlement service.

Furthermore, for example, the information processing system 11 is configured by connecting a user terminal 13, a card 14, an authentication settlement proxy server 15, a service provider server 16, a settlement account server 17, an entrance gate device 18, and a shop device 19 via a network 12 such as the Internet, for example.

The user terminal 13 is assumed to be used by the user himself/herself registered with the settlement service provided by the information processing system 11, and the card 14 is assumed to be used by a family member of the user himself/herself.

As a proxy, the authentication settlement proxy server 15 executes authentication or settlement in a settlement service provided by the information processing system 11.

The service provider server 16 is operated by a business operator that provides a settlement service provided by the information processing system 11.

The settlement account server 17 manages a settlement account available in the settlement service provided by the information processing system 11.

The entrance gate device 18 is disposed at an entrance for entering a place (a theme park or the like) where a settlement service provided by the information processing system 11 is used, and can open a gate in response to a user waving the card 14.

The shop device 19 is disposed in a shop that sells a product or service with a settlement service provided by the information processing system 11, and the user can make settlement, such as a payment, by waving the card 14.

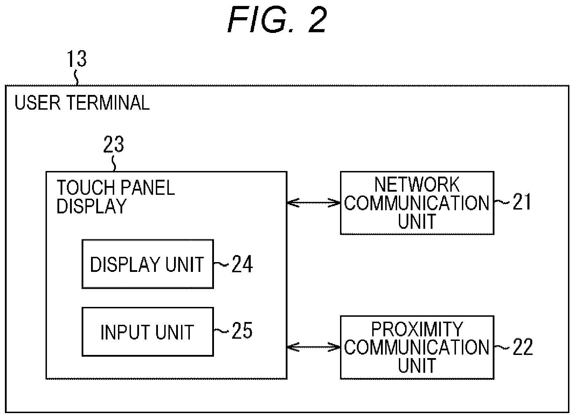

Fig. 2 is a block diagram illustrating a configuration example of the user terminal 13.

As illustrated in Fig. 2, the user terminal 13 includes a network communication unit 21, a proximity communication unit 22, and a touch panel display 23.

The network communication unit 21 communicates with the authentication settlement proxy server 15, the service provider server 16, and the settlement account server 17 via the network 12. For example, when the user performs operation of purchasing a theme park ticket, the network communication unit 21 requests the service provider server 16 to purchase the ticket and associate the ticket with the card 14. Furthermore, when the user performs operation of setting an upper limit amount as an upper limit for payment for purchasing a product or service in the theme park, the network communication unit 21 requests to associate the upper limit amount with the card 14. Here, the upper limit amount is an amount of money previously set as a right to enable purchase of a product or service. Then, a purchasable amount decreases by subtracting the purchase amount of the product or service from the upper limit amount, and the upper limit amount can be increased (increased along with the purchasable amount) by an update, as necessary.

When the card 14 is waved by the user, the proximity communication unit 22 performs proximity communication with the card 14. For example, the proximity communication unit 22 acquires various kinds of information (an identification number IDm, URL, or the like, which will be described later) stored in the card 14.

The touch panel display 23 includes a display unit 24 and an input unit 25. The display unit 24 displays various screens, which will be described later, and the input unit 25 acquires input by a user using touch operation on graphical user interfaces (GUIs) arranged on the screens.

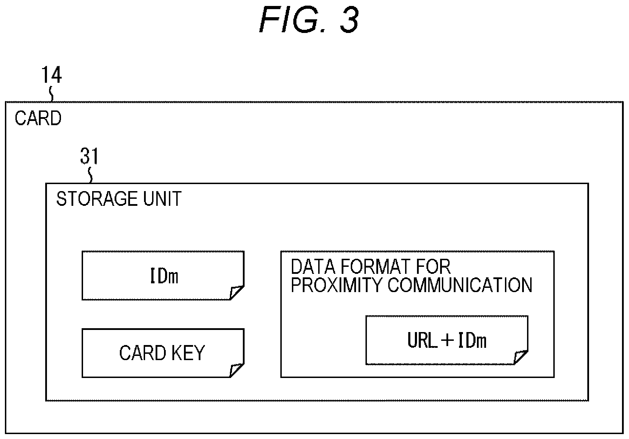

Fig. 3 is a block diagram illustrating a configuration example of the card 14.

As illustrated in Fig. 3, the card 14 includes a storage unit 31.

The storage unit 31 stores an identification number IDm uniquely assigned to each card 14 and a card key used for encryption. Moreover, the storage unit 31 stores a combination of a uniform resource locator (URL) of the authentication settlement proxy server 15 and the identification number IDm by using a data format for proximity communication.

Then, the card 14 has an association function using the identification number IDm and a function of automatically opening an upper limit amount balance inquiry page via the authentication settlement proxy server 15 by using the URL of the authentication settlement proxy server 15.

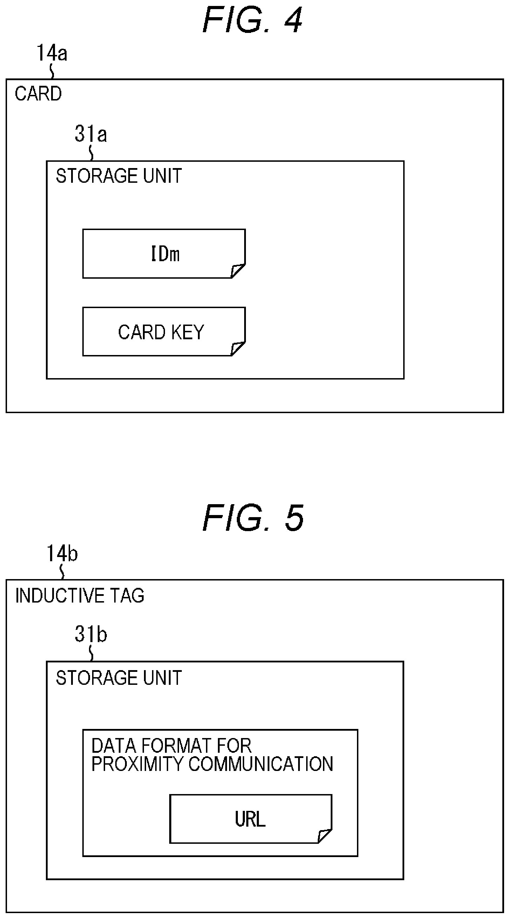

Note that the card 14 may have only an association function using the identification number IDm. That is, a card 14a illustrated in Fig. 4 has a configuration in which an identification number IDm and a card key are stored in a storage unit 31a, and a combination of the URL of the authentication settlement proxy server 15 and the identification number IDm is not stored.

Furthermore, instead of a card 14, it is possible to use an inductive tag 14 having a function of automatically displaying a page on which ticket purchase processing and continuous settlement approval processing are performed by using the URL of the service provider server 16. That is, an inductive tag 14b illustrated in Fig. 5 has a configuration in which the URL of the service provider server 16 is stored in a storage unit 31b.

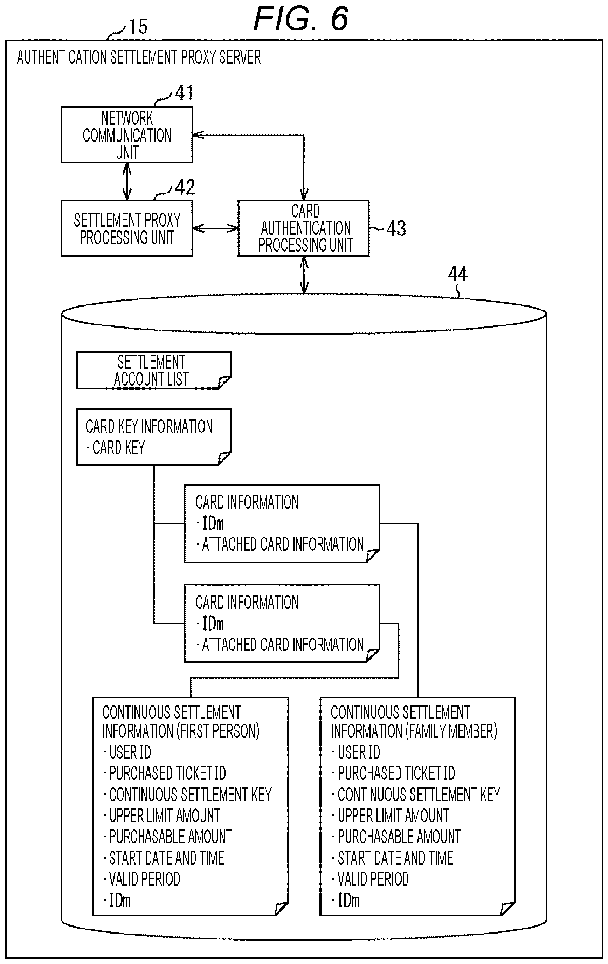

Fig. 6 is a block diagram illustrating a configuration example of the authentication settlement proxy server 15.

As illustrated in Fig. 6, the authentication settlement proxy server 15 includes a network communication unit 41, a settlement proxy processing unit 42, a card authentication processing unit 43, and a database 44.

The network communication unit 41 communicates with the user terminal 13, the service provider server 16, and the settlement account server 17 via the network 12. For example, the network communication unit 41 acquires an upper limit amount (an update upper limit amount for updating the limit), a valid period (an update valid period for updating a limit), an identification number IDm, or the like transmitted from the user terminal 13. Furthermore, the network communication unit 41 acquires a purchase amount, an identification number IDm, or the like transmitted from the shop device 19, and acquires an identification number IDm transmitted from the entrance gate device 18.

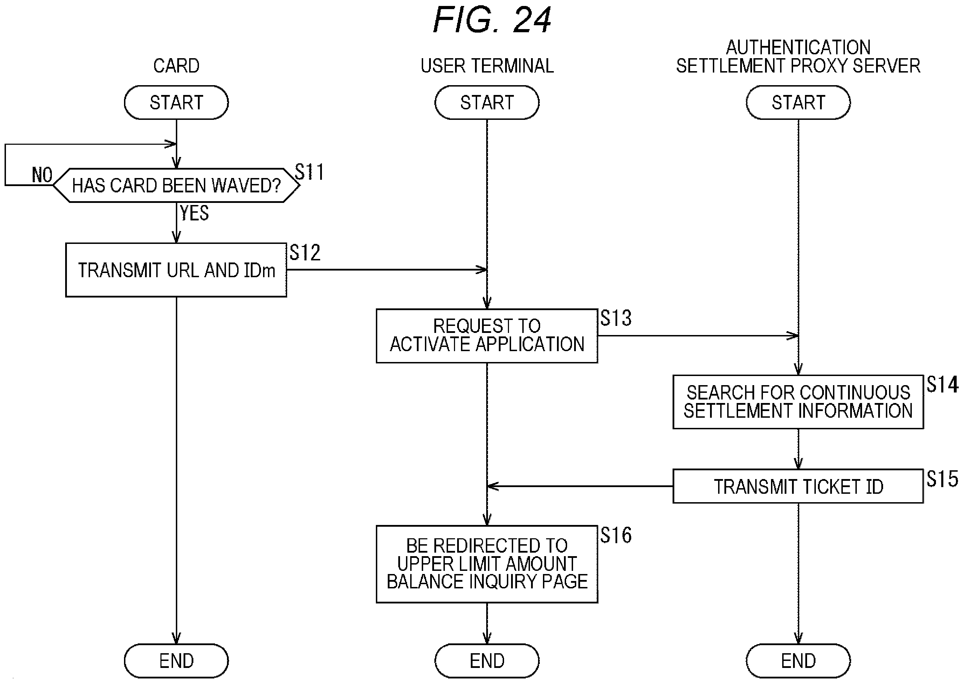

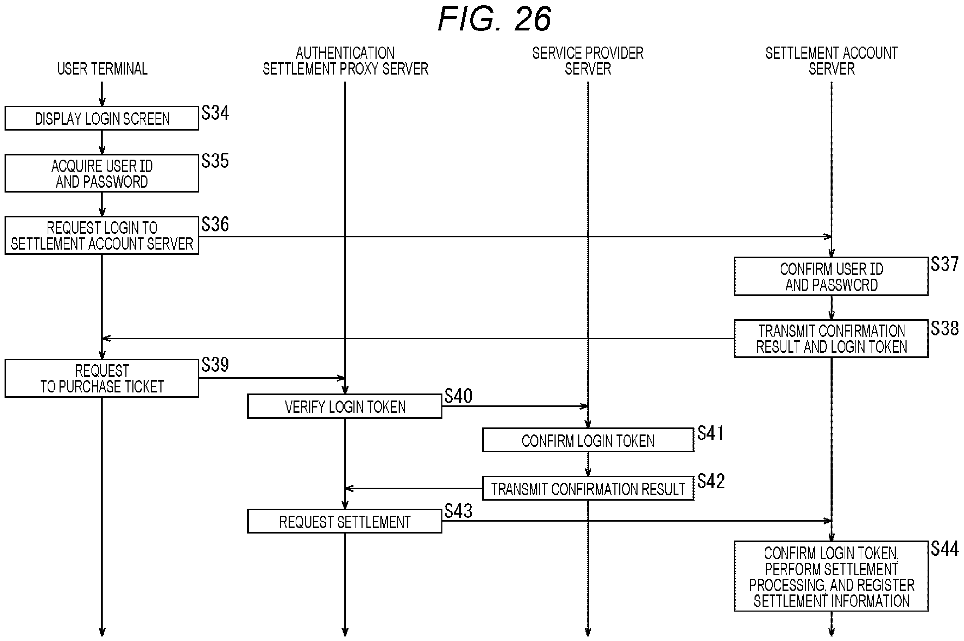

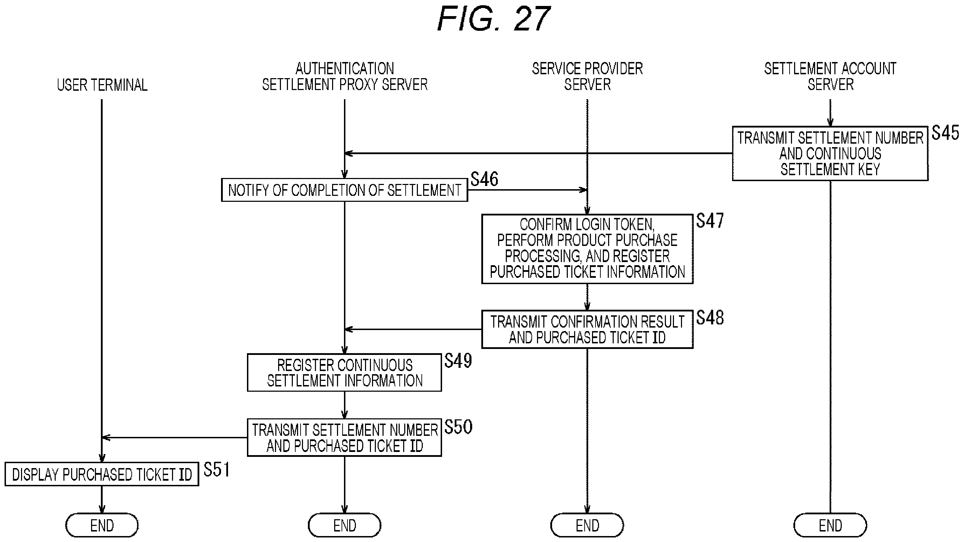

The settlement proxy processing unit 42 performs processing related to proxy of a settlement between the user terminal 13 and the settlement account server 17, for example, as described in each processing illustrated in Figs. 24 to 35. For example, the settlement proxy processing unit 42 writes, in continuous settlement information, various kinds of information acquired by the network communication unit 41, or updates content of the continuous settlement information.

The card authentication processing unit 43 performs processing related to authentication of the card 14, for example, authentication using a card command and a card response, for example, as described in each processing illustrated in Figs. 24 to 35.

In the database 44, a settlement account list, card key information, card information, and continuous settlement information are registered. Furthermore, a card key is registered in the card key information, and two pieces of card information are linked in an example in Fig. 6.

Furthermore, an identification number IDm and attached card information are registered in each of the two pieces of card information. First card information is linked to continuous settlement information of a first person, and second card information is linked to continuous settlement information of a family member. In each of the pieces of the continuous settlement information, a user ID, a purchased ticket ID, a continuous settlement key, an upper limit amount, a purchasable amount, a start date and time, a valid period, and an identification number IDm are registered.

Here, the continuous settlement information registered in the database 44 of the authentication settlement proxy server 15 is information that continuously records information regarding a settlement for a payment. For example, each time ticket purchase processing, processing of associating the card 14, settlement processing accompanying purchase of a product or service, or limit update processing of an upper limit amount, valid period, or the like is performed, a result of each processing is sequentially recorded (updated). Thus, continuous settlement information linked to card information of the card 14 is managed by the authentication settlement proxy server 15, by which convenience of settlement service using the card 14 can be improved. For example, it is possible to enter from the entrance gate device 18 not by using the user terminal 13 used to purchase a ticket, but by using the card 14 associated with the purchased ticket. Furthermore, it is possible to set a limit so that a settlement at the shop device 19 is made within a previously set upper limit amount.

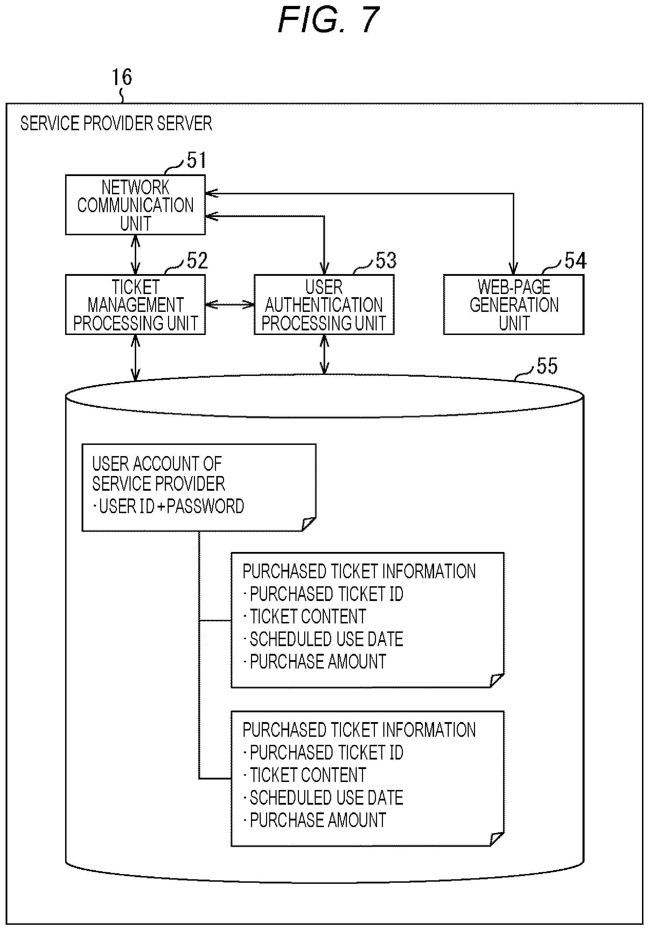

Fig. 7 is a block diagram illustrating a configuration example of the service provider server 16.

As illustrated in Fig. 7, the service provider server 16 includes a network communication unit 51, a ticket management processing unit 52, a user authentication processing unit 53, a web-page generation unit 54, and a database 55.

The network communication unit 51 communicates with the user terminal 13, the authentication settlement proxy server 15, and the settlement account server 17 via the network 12. For example, the network communication unit 51 transmits a service provider top page to the user terminal 13 in response to a request from the user terminal 13.

The ticket management processing unit 52 performs processing related to ticket management as described in each processing illustrated in Figs. 24 to 35. For example, the ticket management processing unit 52 performs processing of purchasing a theme park ticket purchased by the user, processing of reading information regarding a purchased ticket, or the like.

As described in each processing illustrated in Figs. 24 to 35, the user authentication processing unit 53 performs processing related to user authentication, for example, processing of confirming a combination of a user ID and password registered with a service provider.

The web-page generation unit 54 generates, for example, a service provider top page.

A user account of the service provider and two pieces of purchased ticket information are registered in the database 55. A combination of a user ID and a password is registered in the user account of the service provider, and a purchased ticket ID, ticket content, a scheduled use date, and a purchase amount are registered in each of the pieces of the purchased ticket information.

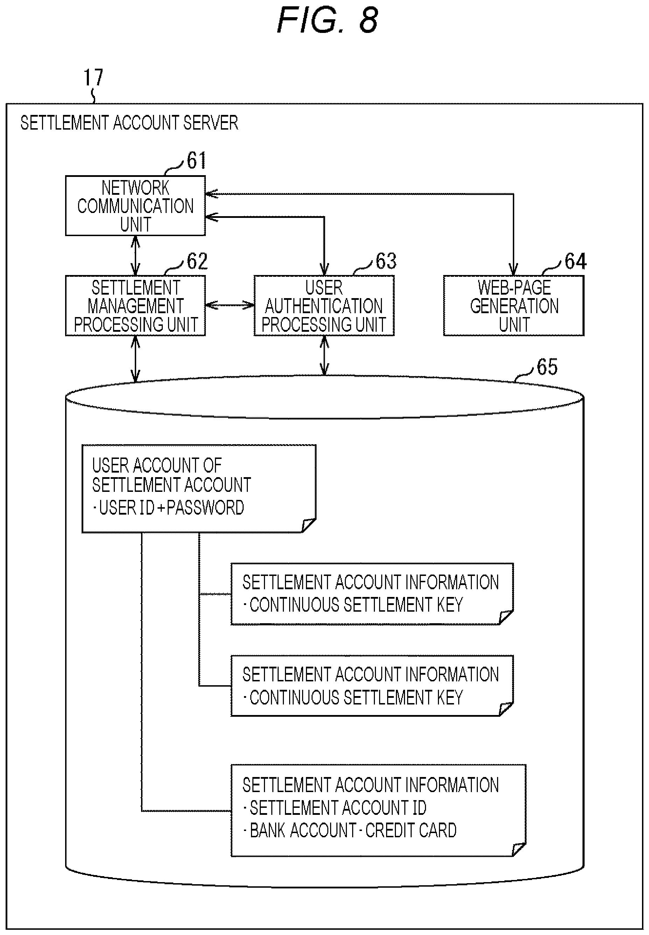

Fig. 8 is a block diagram illustrating a configuration example of the settlement account server 17.

As illustrated in Fig. 8, the settlement account server 17 includes a network communication unit 61, a settlement management processing unit 62, a user authentication processing unit 63, a web-page generation unit 64, and a database 65.

The network communication unit 61 communicates with the user terminal 13, the authentication settlement proxy server 15, and the service provider server 16 via the network 12. For example, the network communication unit 51 transmits a settlement account login screen to the user terminal 13 in response to a request from the user terminal 13.

The settlement management processing unit 62 performs processing related to settlement management as described in each processing illustrated in Figs. 24 to 35. For example, the settlement management processing unit 62 confirms a continuous settlement key registered in settlement account information, and performs processing of withdrawing a purchase amount of a product or service from a balance in the account, the product or service being purchased by the user.

As described in each processing illustrated in Figs. 24 to 35, the user authentication processing unit 63 performs processing related to user authentication, for example, processing of confirming a combination of a user ID and password registered in a settlement account.

The web-page generation unit 64 generates, for example, a settlement account login screen.

In the database 65, a user account of the settlement account and three pieces of settlement account information are registered. A combination of a user ID and a password is registered in the user account of the settlement account. Furthermore, a continuous settlement key is registered in each of the two pieces of settlement account information, and a settlement account ID, a bank account, and a credit card are registered in another piece of settlement account information.

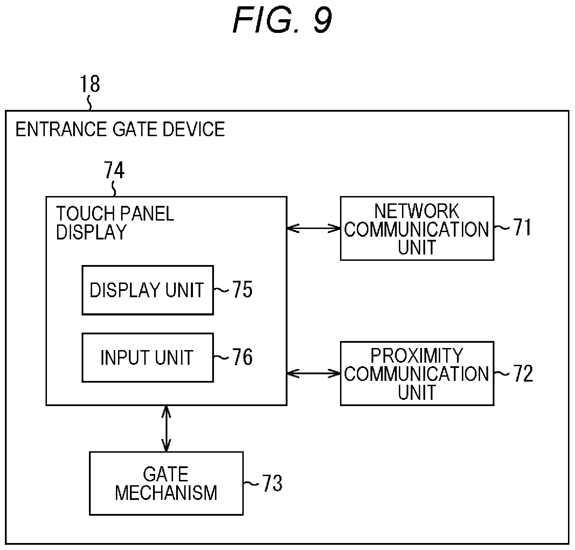

Fig. 9 is a block diagram illustrating a configuration example of the entrance gate device 18.

As illustrated in Fig. 9, the entrance gate device 18 includes a network communication unit 71, a proximity communication unit 72, a gate mechanism 73, and a touch panel display 74.

The network communication unit 71 communicates with the authentication settlement proxy server 15, the service provider server 16, and the settlement account server 17 via the network 12. For example, the network communication unit 71 acquires, from the service provider server 16, purchased ticket information related to a purchased ticket associated with the card 14 waved by the user, and confirms whether or not it is a scheduled use date on which the user is scheduled to use the theme park, or the like.

When the card 14 is waved by the user, the proximity communication unit 72 performs proximity communication with the card 14 to acquire an identification number IDm.

The gate mechanism 73 is a mechanism for opening or closing the gate. For example, in a case where a date on which the user waves the card 14 is the scheduled use date registered in the purchased ticket information, the gate mechanism 73 opens the gate.

The touch panel display 74 includes a display unit 75 and an input unit 76. The display unit 75 displays various screens, which will be described later, and the input unit 76 acquires input by a user using touch operation on GUIs arranged on the screens.

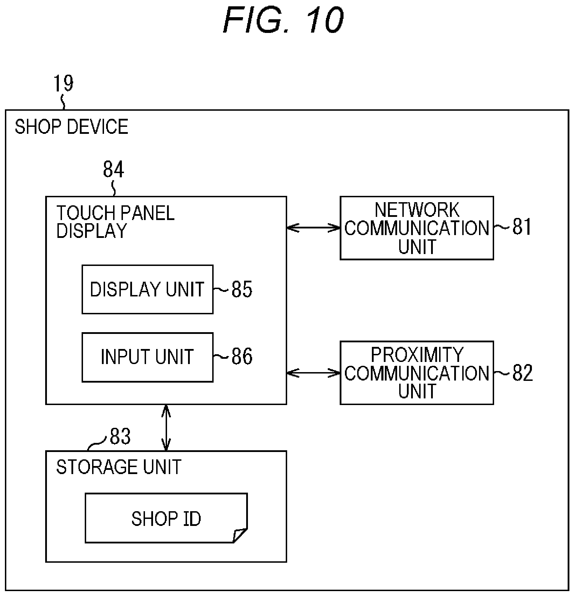

Fig. 10 is a block diagram illustrating a configuration example of the shop device 19.

As illustrated in Fig. 10, the shop device 19 includes a network communication unit 81, a proximity communication unit 82, a storage unit 83, and a touch panel display 84.

The network communication unit 81 communicates with the authentication settlement proxy server 15, the service provider server 16, and the settlement account server 17 via the network 12. For example, the network communication unit 81 transmits an ID, purchase amount, or the like of a product or service purchased by the user to the authentication settlement proxy server 15 to request a settlement, or acquires a settlement result of the settlement from the authentication settlement proxy server 15.

When the card 14 is waved by the user, the proximity communication unit 82 performs proximity communication with the card 14 to acquire the identification number IDm.

The storage unit 83 stores, for example, a shop ID for individually identifying a shop in which a shop device 19 is used.

The touch panel display 84 includes a display unit 85 and an input unit 86. The display unit 85 displays various screens, which will be described later, and the input unit 86 acquires input by a user using touch operation on GUIs arranged on the screens.

### <Display example of screens>

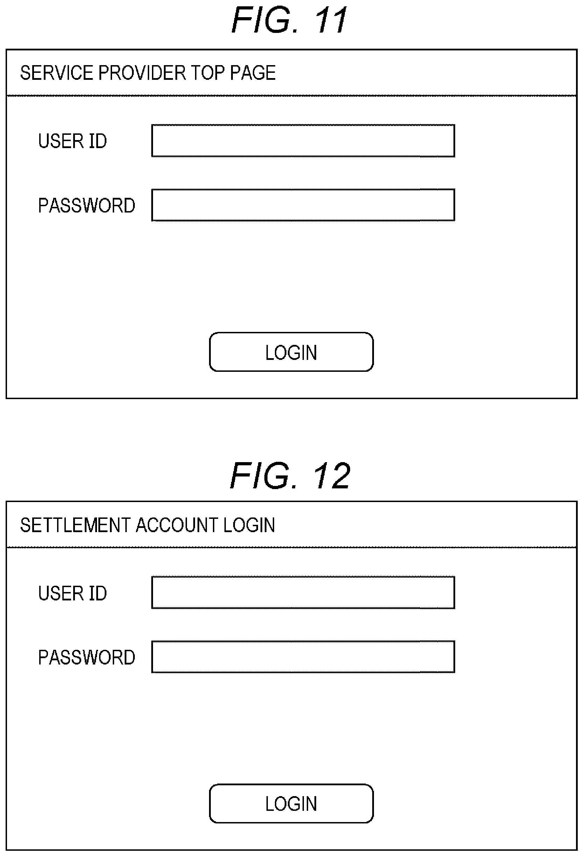

Fig. 11 illustrates a display example of a service provider top page screen displayed in the display unit 24 of the user terminal 13 when logging in to the service provider server 16.

As illustrated in Fig. 11, GUIs for a text box for inputting a user ID, a text box for inputting a password, and a login button for instructing execution of login are disposed on the service provider top page screen.

Fig. 12 illustrates a display example of a settlement account login screen displayed in the display unit 24 of the user terminal 13 when logging in to the settlement account server 17.

As illustrated in Fig. 12, GUIs for a text box for inputting a user ID, a text box for inputting a password, and a login button for instructing execution of login are disposed on the settlement account login screen.

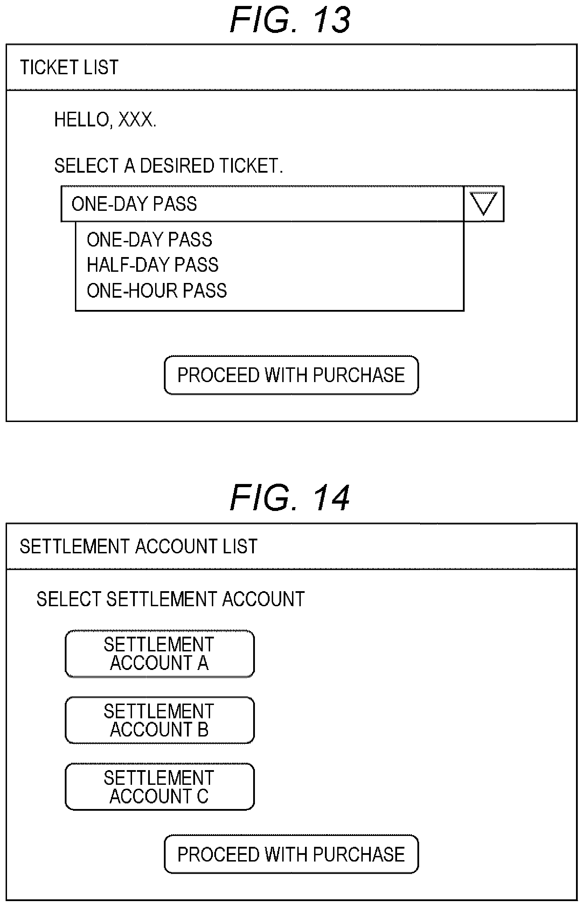

Fig. 13 illustrates a display example of a ticket list screen displayed in the display unit 24 of the user terminal 13 when the user purchases a ticket.

For example, disposed on the ticket list screen are GUIs for a drop-down list for selecting a ticket that the user wishes to purchase, and a proceed-with-purchase button for instructing to proceed with a purchase procedure for executing purchase of the ticket selected by using the drop-down list. Note that, in a display example illustrated in Fig. 13, a one-day pass, a half-day pass, or a one-hour pass can be selected by using a drop-down list.

Fig. 14 illustrates a display example of a settlement account list screen displayed in the display unit 24 of the user terminal 13 when the user selects a settlement account.

For example, disposed on the settlement account list screen are GUIs for a plurality of settlement account selection buttons for instructing selection of an account for a settlement of a ticket to be purchased by the user, and a proceed-with-purchase button for proceeding with a ticket purchase procedure with a settlement account selected by using the plurality of settlement account selection buttons. Note that, in the display example illustrated in Fig. 14, an account for the settlement can be selected from among three settlement accounts of a settlement account A, a settlement account B, and a settlement account C. Furthermore, in addition to displaying a plurality of settlement accounts and prompting the user to select a settlement account, a user interface for selecting a settlement service (various settlement methods provided by various business operators) in which each settlement account is registered may be adopted.

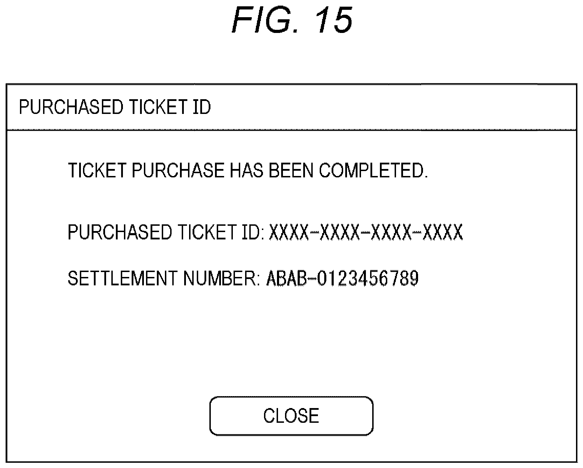

Fig. 15 illustrates a display example of a purchased ticket ID screen displayed in the display unit 24 of the user terminal 13 after a ticket purchase is completed.

For example, on the purchased ticket ID screen, a ticket ID of a ticket for which purchase has been completed and a settlement number specifying a settlement for when purchasing the ticket are displayed, and a GUI for a close button for instructing closing of the ticket ID screen is disposed.

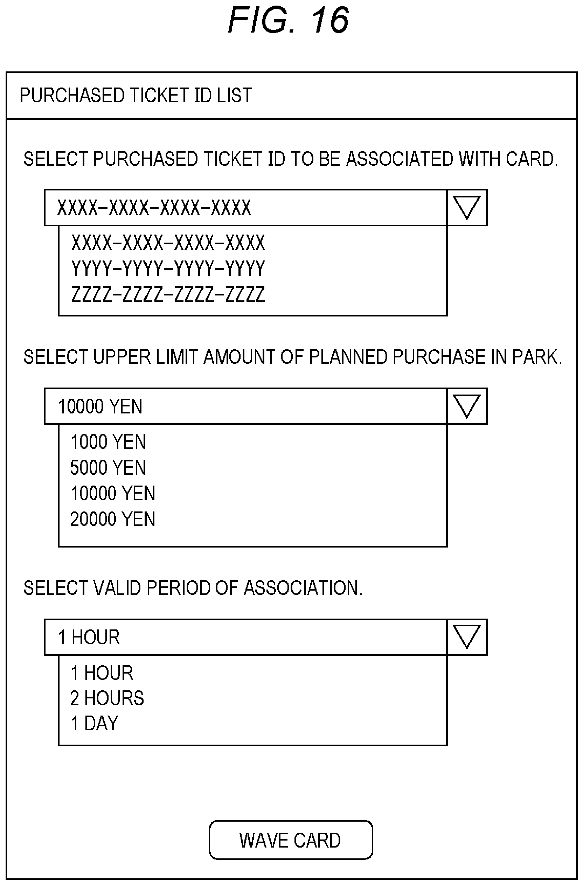

Fig. 16 illustrates a display example of a purchased ticket ID list screen displayed in the display unit 24 of the user terminal 13 when associating the card 14.

As illustrated in Fig. 16, disposed on the purchased ticket ID list screen are GUIs for a drop-down list for selecting a purchased ticket ID, a drop-down list for selecting an upper limit amount, a drop-down list for selecting a valid period, and a wave-card button for instructing a shift to processing of waving a card. For example, if the user selects a purchased ticket ID, an upper limit amount, and a valid period, performs operation on the wave-card button, and then waves the card 14 over the user terminal 13, selected content is associated with the card 14.

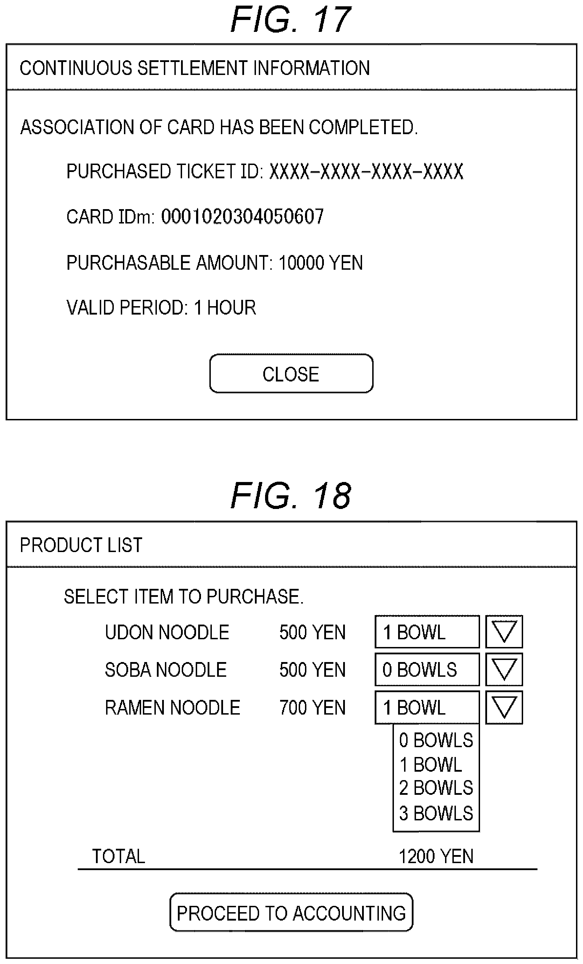

Fig. 17 illustrates a display example of a continuous settlement information screen displayed in the display unit 24 of the user terminal 13 after completing association of the card 14.

As illustrated in Fig. 17, on the continuous settlement information screen, a purchased ticket ID, an identification number IDm, a purchasable amount, and a valid period are displayed, and a GUI for a close button for instructing close of the continuous settlement information screen is disposed.

Fig. 18 illustrates a display example of a product list screen displayed in the display unit 85 of the shop device 19 when selecting product to be purchased.

As illustrated in Fig. 18, GUIs for a plurality of drop-down lists for selecting the number of products to be purchased for each corresponding product, and a proceed-to-accounting button for instructing to proceed with accounting procedure are disposed on the product list screen. For example, after the number of products is selected by using the drop-down list and operation on the proceed-to-accounting button is performed, settlement is made when the user waves the card 14 over the shop device 19.

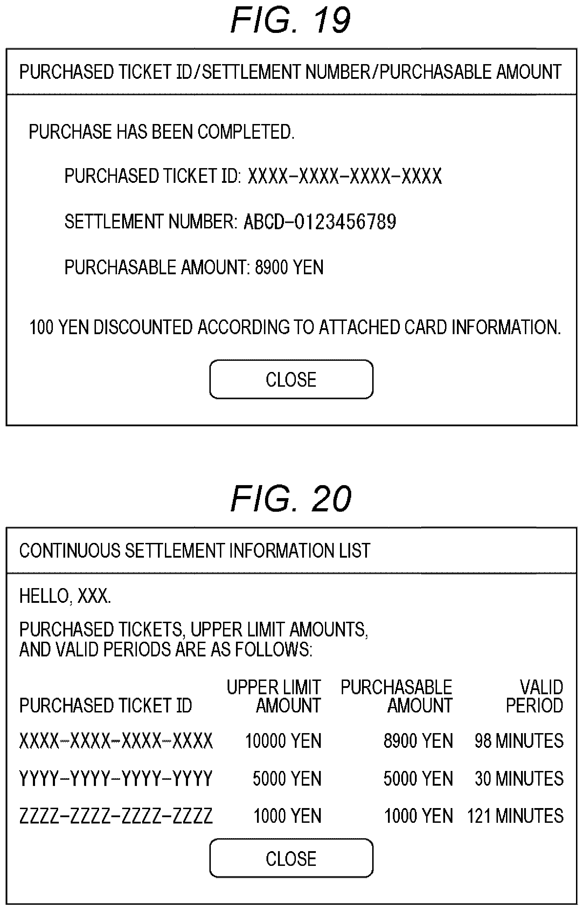

Fig. 19 illustrates a display example of a purchased ticket ID/settlement number/purchasable amount screen displayed in the display unit 85 of the shop device 19 after product purchase is completed.

As illustrated in Fig. 19, on the purchased ticket ID/settlement number/purchasable amount screen, a purchased ticket ID, a settlement number, and a purchasable amount are displayed, and a GUI for a close button for instructing close of the purchased ticket ID/settlement number/purchasable amount screen is disposed. Furthermore, for example, in a case where additional processing such as a discount has been performed, content thereof is displayed in the purchased ticket ID/settlement number/purchasable amount screen.

Fig. 20 illustrates a display example of a continuous settlement information list screen displayed in the display unit 24 of the user terminal 13 when confirming information registered in the continuous settlement information.

As illustrated in Fig. 20, on the continuous settlement information list screen, a purchased ticket ID, an upper limit amount, a purchasable amount, and a valid period are displayed, and a GUI for a close button for instructing close of the continuous settlement information list screen is disposed.

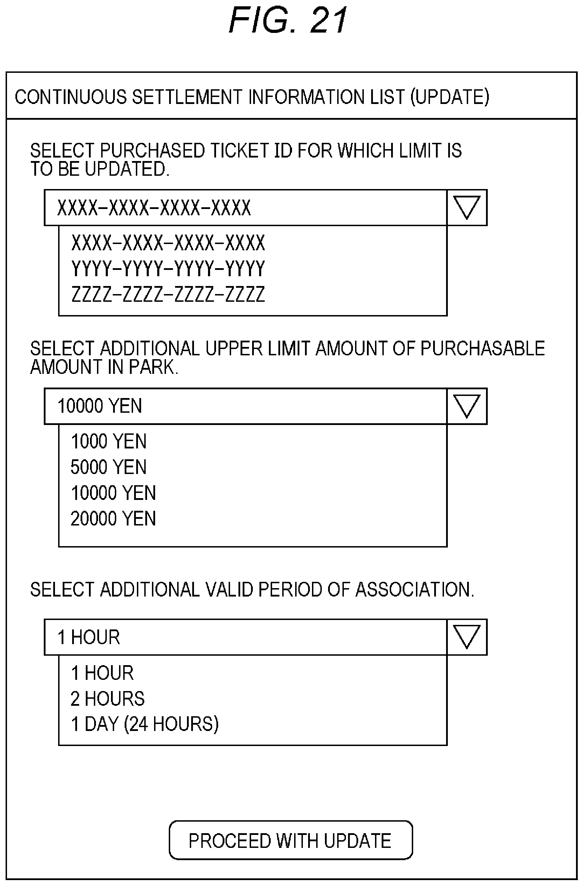

Fig. 21 illustrates a display example of a continuous settlement information list (update) screen displayed in the display unit 24 of the user terminal 13 when updating information registered in the continuous settlement information.

As illustrated in Fig. 21, on the continuous settlement information list (update) screen, a drop-down list for selecting a purchased ticket ID for which a limit is to be updated, a drop-down list for selecting an additional upper limit amount of purchasable amount, and a drop-down list for selecting an additional valid period are displayed, and a GUI for a proceed-with-update button for instructing to proceed with update processing is disposed.

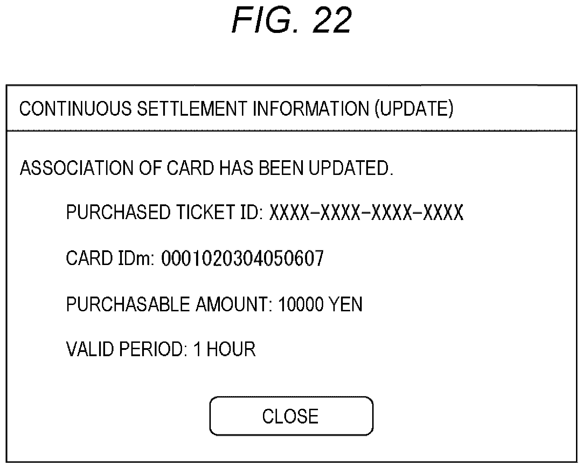

Fig. 22 illustrates a display example of a continuous settlement information (update) screen displayed in the display unit 24 of the user terminal 13 after updating information registered in the continuous settlement information.

As illustrated in Fig. 22, on the continuous settlement information (update) screen, a purchased ticket ID for which a limit is updated, an identification number IDm, a purchasable amount, and a valid period are displayed, and a GUI for a close button for instructing close of the continuous settlement information (update) screen is disposed.

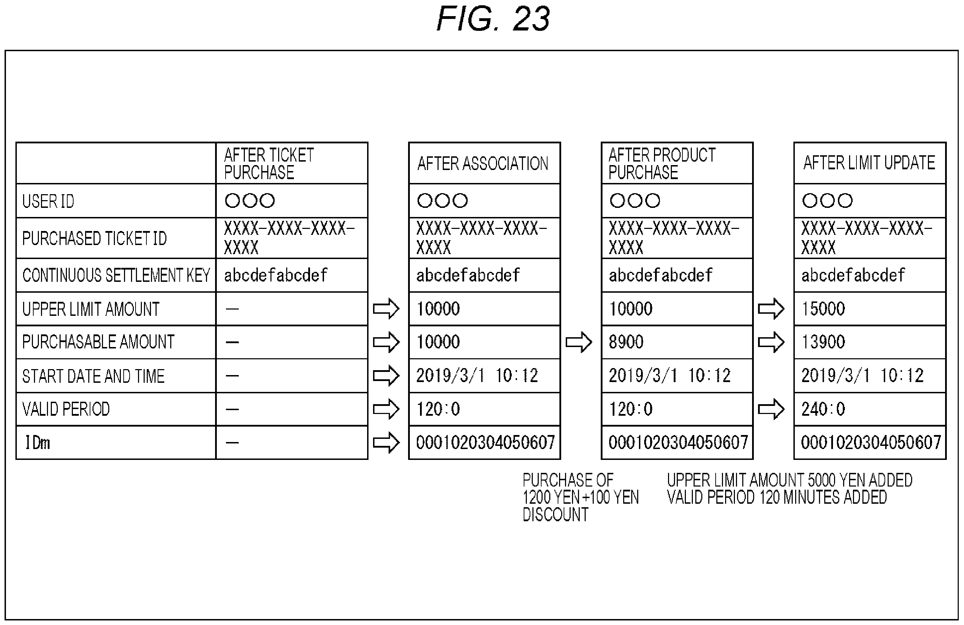

Here, continuous settlement information is described with reference to Fig. 23.

As illustrated in Fig. 23, in the continuous settlement information, it is possible to register a user ID, a purchased ticket ID, a continuous settlement key, an upper limit amount, a purchasable amount, a start date and time, an effective period, and an identification number IDm.

First, after a ticket is purchased, the user ID, the purchased ticket ID, and the continuous settlement key are recorded.

Then, after the card 14 is associated, the upper limit amount, the purchasable amount, the start date and time, the effective period, and the identification number IDm are recorded.

Thereafter, for example, if a product of 1200 yen is purchased, and a discount of 100 yen is provided as additional processing at that time, the purchasable amount is updated from 10000 yen to 8900 yen.

Moreover, for example, if an upper limit amount is increased by 5000 yen and a valid period is increased by 120 minutes, the upper limit amount is updated from 10000 yen to 15000 yen, the purchasable amount is updated from 9800 yen to 13900 yen, and the valid period is updated from 120 minutes to 240 minutes.

Thus, information regarding a settlement for a payment is continuously recorded on the continuous settlement information.

### <Processing examples of each processing>

Processing examples of each processing executed by the information processing system 11 will be described with reference to Figs. 24 to 35.

Fig. 24 illustrates a flowchart describing application activation processing. For example, the application activation processing is performed among the user terminal 13, the card 14, and the authentication settlement proxy server 15.

In Step S11, the card 14 determines whether or not the card 14 has been waved over the user terminal 13 by the user, and waits for performing the processing until determining to have been waved over the user terminal 13. Then, in a case where the card 14 determines to have been waved over the user terminal 13, the processing proceeds to Step S12.

In Step S12, proximity communication is performed between the user terminal 13 and the card 14, and a combination of the URL of the authentication settlement proxy server 15 and the identification number IDm is transmitted from the card 14 to the user terminal 13, the combination being stored in the storage unit 31 of the card 14,.

In Step S13, in the user terminal 13, the proximity communication unit 22 acquires the URL of the authentication settlement proxy server 15 and the identification number IDm, which are transmitted from the card 14 in Step S12. Then, the network communication unit 21 transmits the URL of the authentication settlement proxy server 15 and the identification number IDm to the authentication settlement proxy server 15 via the network 12, and requests the authentication settlement proxy server 15 to activate an application.

In Step S14, in the authentication settlement proxy server 15, the network communication unit 41 acquires the URL of the authentication settlement proxy server 15 and identification number IDm transmitted from the user terminal 13 in Step S13. Then, the card authentication processing unit 43 searches the database 44 on the basis of the identification number IDm of the card 14, the identification number IDm being acquired by the network communication unit 41, and acquires a ticket ID registered in continuous settlement information linked to the card information of the identification number IDm of the card 14.

In Step S15, in the authentication settlement proxy server 15, the network communication unit 41 transmits, to the user terminal 13 via the network 12, the ticket ID searched and acquired from the database 44 by the card authentication processing unit 43 in Step S14.

In Step S16, in the user terminal 13, the network communication unit 21 acquires the ticket ID transmitted from the authentication settlement proxy server 15 in Step S15, and the user terminal 13 is redirected to an upper limit amount balance inquiry page on the basis of the ticket ID. Thereafter, the application activation processing ends.

As described above, in the information processing system 11, by the application activation processing being executed, the upper limit amount balance inquiry page can be automatically opened via the authentication settlement proxy server 15 only by the user waving the card 14 over the user terminal 13.

Note that, for example, in a case where the user waves the user terminal 13 over the inductive tag 14b in Fig. 5, the URL of the service provider server 16 transmitted from the inductive tag 14b is acquired by the user terminal 13 in Step S12. Then, in this case, the processing in Steps S13 to S15 is skipped and the processing proceeds to Step S16, and the user terminal 13 is redirected to a page for performing ticket purchase processing and continuous settlement approval processing according to the URL of the service provider server 16.

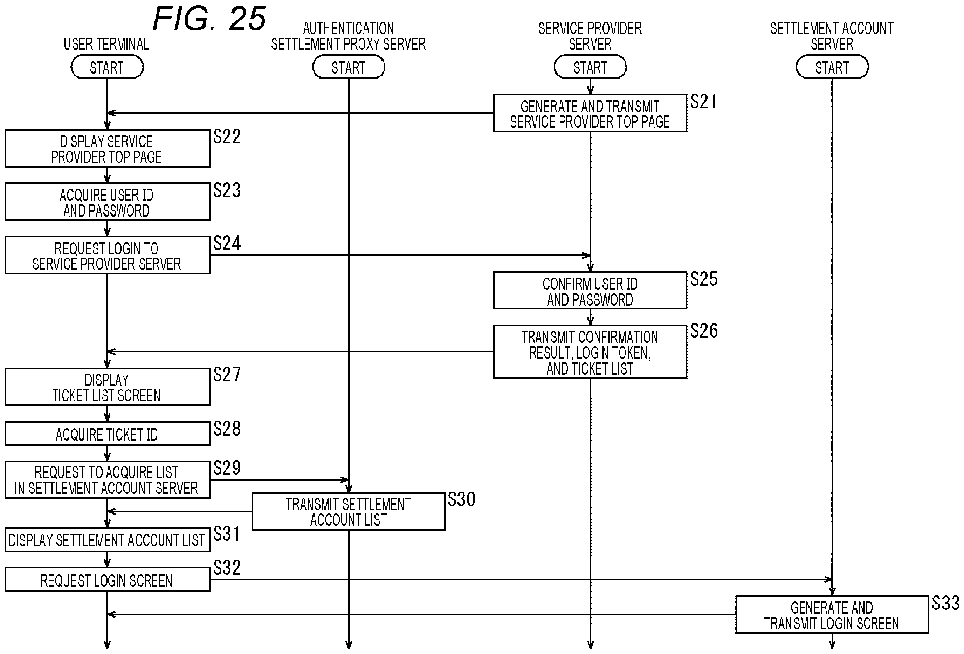

Figs. 25 to 27 illustrate a flowchart describing ticket purchase processing and continuous settlement approval processing. For example, the ticket purchase processing and continuous settlement approval processing are performed among the user terminal 13, the authentication settlement proxy server 15, the service provider server 16, and the settlement account server 17.

In Step S21, in the service provider server 16, for example, the web-page generation unit 54 generates a service provider top page in response to a request from the user terminal 13 to display a web page. Then, the network communication unit 51 transmits the service provider top page generated by the web-page generation unit 54 to the user terminal 13 via the network 12.

In Step S22, in the user terminal 13, the network communication unit 21 acquires the service provider top page transmitted from the service provider server 16 in Step S21. Then, the display unit 24 of the touch panel display 23 displays the service provider top page (refer to Fig. 11 described above) acquired by the network communication unit 21. With this arrangement, the user can perform touch operation on the service provider top page screen displayed in the display unit 24 of the touch panel display 23 to input the user ID and password registered with the service provider.

In Step S23, in the user terminal 13, the input unit 25 of the touch panel display 23 acquires the user ID and password input by the user performing touch operation on the service provider top page screen.

In Step S24, in the user terminal 13, the network communication unit 21 transmits, to the service provider server 16 via the network 12, the user ID and password acquired by the input unit 25 in Step S23, and requests login to the service provider server 16.

In Step S25, in the service provider server 16, the network communication unit 51 acquires the user ID and password registered with the service provider, the user ID and password being transmitted from the user terminal 13 in Step S24. Then, the user authentication processing unit 53 refers to the user account of the service provider registered in the database 55, and confirms the user ID and password acquired by the network communication unit 51. Here, in a case where the combination of the user ID and password matches, the user authentication processing unit 53 acquires a confirmation result (OK) indicating a successful login. Meanwhile, in a case where the combination of the user ID and password does not match, the user authentication processing unit 53 acquires a confirmation result (NG) indicating a failed login.

In Step S26, in the service provider server 16, the network communication unit 51 transmits, to the user terminal 13 via the network 12, a result (OK/NG) of confirmation of the user ID and password acquired by the user authentication processing unit 53 in Step S25. At this time, in a case where a confirmation result (OK) indicating a successful login is acquired, the network communication unit 51 also transmits a login token and a ticket list of tickets provided by the service provider.

In Step S27, in the user terminal 13, the network communication unit 21 acquires the login token and the ticket list in a case where the login to the service provider server 16 is successful. Then, the display unit 24 of the touch panel display 23 displays a ticket list screen (refer to Fig. 13 described above) for presenting the ticket list acquired by the network communication unit 21. With this arrangement, the user can perform touch operation on the ticket list screen displayed in the display unit 24 of the touch panel display 23 to select a desired ticket and proceed with ticket purchase processing.

In Step S28, in the user terminal 13, the input unit 25 of the touch panel display 23 acquires the ticket ID of the ticket selected by the user performing touch operation on the ticket list screen.

In Step S29, in the user terminal 13, the network communication unit 21 requests the authentication settlement proxy server 15 to acquire a list in the settlement account server via the network 12.

In Step S30, in the authentication settlement proxy server 15, the network communication unit 41 transmits, to the user terminal 13 via the network 12, a list in the settlement account server requested from the user terminal 13 in Step S29.

In Step S31, in the user terminal 13, the network communication unit 21 acquires the list in the settlement account server transmitted from the authentication settlement proxy server 15 in Step S30. Then, the display unit 24 of the touch panel display 23 displays the settlement account list screen (refer to Fig. 14 described above) for presenting the list in the settlement account server, the list being acquired by the network communication unit 21.

With this arrangement, the user can perform touch operation on the settlement account list screen displayed in the display unit 24 of the touch panel display 23 to select a desired settlement account. Then, the input unit 25 of the touch panel display 23 acquires a settlement account ID for specifying the settlement account selected by the user by touch operation on the settlement account list screen.

In Step S32, in the user terminal 13, the network communication unit 21 requests, via the network 12, the settlement account server 17 specified by the settlement account ID acquired by the input unit 25 in Step S31 for a settlement account login screen for logging in to the settlement account server 17.

In Step S33, in the settlement account server 17, the web-page generation unit 64 generates the settlement account login screen requested from the user terminal 13 in Step S32. Then, the network communication unit 61 transmits the settlement account login screen generated by the web-page generation unit 64 to the user terminal 13 via the network 12.

In Step S34, in the user terminal 13, the network communication unit 21 acquires the settlement account login screen transmitted from the settlement account server 17 in Step S33. Then, the display unit 24 of the touch panel display 23 displays the settlement account login screen (refer to Fig. 12 described above) acquired by the network communication unit 21. With this arrangement, the user can perform touch operation on the settlement account login screen displayed in the display unit 24 of the touch panel display 23 to input the user ID and password registered with the settlement account.

In Step S35, in the user terminal 13, the input unit 25 of the touch panel display 23 acquires the user ID and password input by the user performing touch operation on the settlement account login screen.

In Step S36, in the user terminal 13, the network communication unit 21 transmits the user ID and password acquired by the input unit 25 in Step S35 to the settlement account server 17 via the network 12, and requests login to the settlement account server 17.

In Step S37, in the settlement account server 17, the network communication unit 61 acquires the user ID and password registered with the settlement account, the user ID and password being transmitted from the user terminal 13 in Step S36. Then, the user authentication processing unit 63 refers to the user account of the settlement account stored in the database 65, and confirms the user ID and password acquired by the network communication unit 61. Here, in a case where the combination of the user ID and password matches, the user authentication processing unit 63 acquires the confirmation result (OK) indicating a successful login. Meanwhile, in a case where the combination of the user ID and password does not match, the user authentication processing unit 63 acquires a confirmation result (NG) indicating a failed login.

In Step S38, in the settlement account server 17, the network communication unit 61 transmits, to the user terminal 13 via the network 12, a result (OK/NG) of confirmation of the user ID and password acquired by the user authentication processing unit 63 in Step S37. At this time, in a case where a confirmation result (OK) indicating a successful login is acquired, the network communication unit 61 also transmits the login token.

In Step S39, in the user terminal 13, in a case where the login to the settlement account server 17 is successful, the network communication unit 21 acquires the login token transmitted from the settlement account server 17 in Step S38. Moreover, the network communication unit 21 transmits, to the authentication settlement proxy server 15 via the network 12, the ticket ID acquired by the input unit 25 in Step S28, a purchase amount of the ticket specified by the ticket ID, the user ID, and the login token, and requests the authentication settlement proxy server 15 to purchase the ticket.

In Step S40, in the authentication settlement proxy server 15, the network communication unit 41 acquires the ticket ID, purchase amount, user ID, and login token transmitted from the user terminal 13 in Step S39. Moreover, in order to verify the login token, the network communication unit 41 transmits, to the service provider server 16 via the network 12, the login token and login ID for logging in from the authentication settlement proxy server 15 to the service provider server 16.

In Step S41, in the service provider server 16, the network communication unit 51 acquires the login ID and the login token, and the user authentication processing unit 53 confirms the login token. Then, in Step S42, the network communication unit 51 transmits a result (OK/NG) of confirmation of the login token by the user authentication processing unit 53 to the authentication settlement proxy server 15 via the network 12.

In Step S43, in the authentication settlement proxy server 15, the network communication unit 41 acquires the confirmation result of the login token transmitted from the service provider server 16 in Step S42. Then, the network communication unit 41 transmits, to the settlement account server 17 via the network 12, the login token, the login ID for logging in from the authentication settlement proxy server 15 to the settlement account server 17, and a purchase amount of the ticket specified by the ticket ID acquired in Step S40, and requests the settlement account server 17 for a settlement.

In Step S44, in the settlement account server 17, the network communication unit 61 acquires the login ID, login token, and purchase amount transmitted from the authentication settlement proxy server 15 in Step S43. Then, the settlement management processing unit 62 confirms the login token, performs settlement processing, and then registers settlement information after the settlement in the database 65. Moreover, the settlement management processing unit 62 supplies the network communication unit 61 with the settlement number and continuous settlement key for the settlement processing.

In Step S45, in the settlement account server 17, the network communication unit 61 transmits, to the authentication settlement proxy server 15 via the network 12, the settlement number and continuous settlement key supplied from the settlement management processing unit 62 in Step S44.

In Step S46, in the authentication settlement proxy server 15, the network communication unit 41 acquires the settlement number and continuous settlement key transmitted from the settlement account server 17 in Step S45. Moreover, the network communication unit 41 transmits the ticket ID acquired in Step S40 and the settlement number acquired in Step S46 to the service provider server 16 via the network 12, and notifies the service provider server 16 of completion of the settlement.

In Step S47, in the service provider server 16, the network communication unit 51 acquires the ticket ID and settlement number transmitted from the authentication settlement proxy server 15 in Step S46. Then, the ticket management processing unit 52 confirms the login token, performs processing of purchasing a ticket specified by the ticket ID acquired by the network communication unit 51, and then registers, in the database 55, purchased ticket information of the purchased ticket.

In Step S48, in the service provider server 16, the network communication unit 51 transmits the result (OK/NG) of confirmation of the login token and the purchased ticket ID to the authentication settlement proxy server 15 via the network 12.

In Step S49, in the authentication settlement proxy server 15, the network communication unit 41 acquires the confirmation result of the login token and purchased ticket ID transmitted from the service provider server 16 in Step S48. Then, the card authentication processing unit 43 adds the purchased ticket ID acquired by the network communication unit 41 to the continuous settlement information registered in the database 44.

In Step S50, in the authentication settlement proxy server 15, the network communication unit 41 transmits the settlement number acquired in Step S46 and the purchased ticket ID acquired in Step S49 to the user terminal 13 via the network 12.

In Step S51, in the user terminal 13, the network communication unit 21 acquires the settlement number and purchased ticket ID transmitted from the authentication settlement proxy server 15 in Step S50. Then, the display unit 24 of the touch panel display 23 displays the purchased ticket ID screen (refer to Fig. 15 described above) presenting the settlement number and purchased ticket ID acquired by the network communication unit 21. Thereafter, for example, when the purchased ticket ID screen is closed in response to the user performing touch operation on the close button in the purchased ticket ID screen, the ticket purchase processing and the continuous settlement approval processing end.

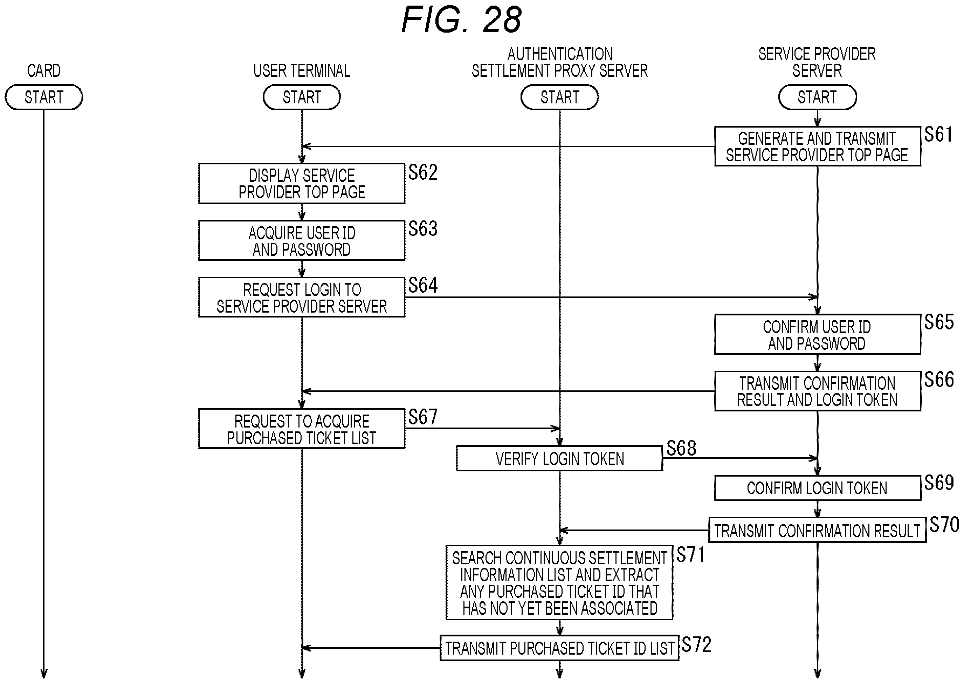

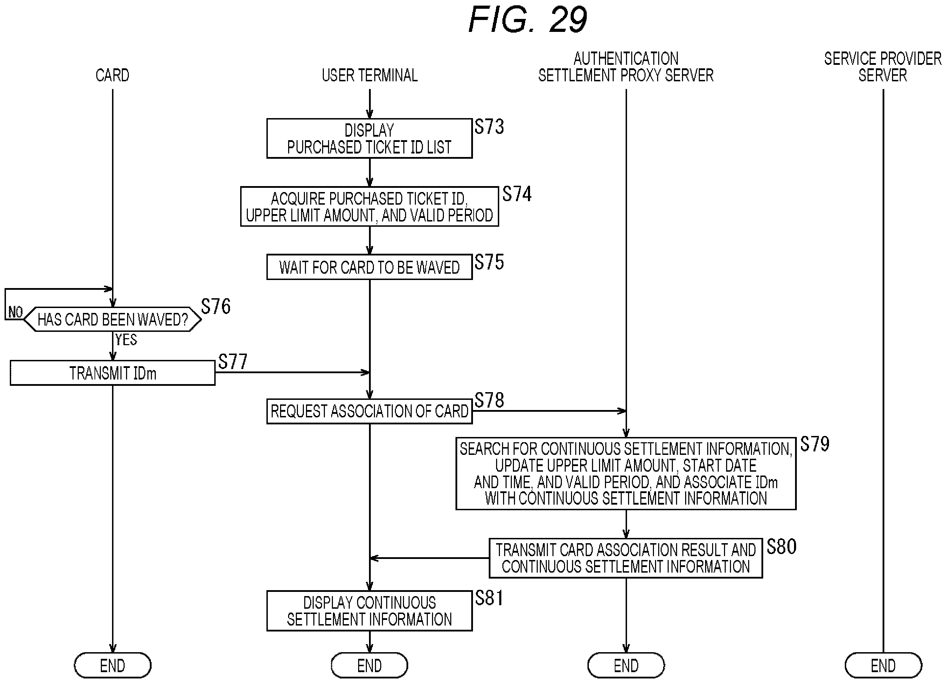

Figs. 28 and 29 illustrate a flowchart describing card association processing. For example, the card association processing is performed among the user terminal 13, the card 14, the authentication settlement proxy server 15, and the service provider server 16.

For example, in Steps S61 to S65, processing similar to the processing in Steps S21 to S25 in Fig. 25 is performed. Thereafter, in Step S66, in the service provider server 16, the network communication unit 51 transmits, to the user terminal 13 via the network 12, the result (OK/NG) of confirmation of the user ID and password acquired by the user authentication processing unit 53 in Step S65. At this time, in a case where a confirmation result (OK) indicating a successful login is acquired, the network communication unit 51 also transmits the login token.

In Step S67, in the user terminal 13, the network communication unit 21 acquires the login token via the network 12 in a case where the login to the service provider server 16 is successful. Then, the network communication unit 21 transmits the user ID acquired in Step S63 and the login token to the authentication settlement proxy server 15 via the network 12, and requests the authentication settlement proxy server 15 to acquire a purchased ticket list.

In Step S68, in the authentication settlement proxy server 15, the network communication unit 41 acquires, via the network 12, the user ID and login token transmitted from the user terminal 13 in Step S67. Moreover, in order to verify the login token, the network communication unit 41 transmits, to the service provider server 16 via the network 12, the login token and login ID for logging in from the authentication settlement proxy server 15 to the service provider server 16.

In Step S69, in the service provider server 16, the network communication unit 51 acquires the login ID and the login token via the network 12, and the user authentication processing unit 53 confirms the login token. Then, in Step S70, the network communication unit 51 transmits a result (OK/NG) of confirmation of the login token by the user authentication processing unit 53 to the authentication settlement proxy server 15 via the network 12.

In Step S71, in the authentication settlement proxy server 15, the network communication unit 41 acquires, via the network 12, the confirmation result of the login token transmitted from the service provider server 16 in Step S70. Then, in a case of a confirmation result (OK) indicating successful confirmation of a login token, the settlement proxy processing unit 42 searches a continuous settlement information list registered in the database 44 on the basis of the user ID acquired by the network communication unit 41 in Step S68, and extracts any purchased ticket ID that has not yet been associated.

In Step S72, in the authentication settlement proxy server 15, the network communication unit 41 transmits, to the user terminal 13 via the network 12, a list of purchased ticket IDs extracted by the settlement proxy processing unit 42 in Step S71.

In Step S73, in the user terminal 13, the network communication unit 21 acquires the list of the purchased ticket IDs transmitted from the authentication settlement proxy server 15 in Step S72. Then, the display unit 24 of the touch panel display 23 displays the purchased ticket ID list screen (refer to Fig. 16 described above) for presenting the list of the purchased ticket IDs, the list being acquired by the network communication unit 21.

With this arrangement, the user can select a purchased ticket ID to be associated with the card 14 by touch operation on the purchased ticket ID list screen, and select a limited range of the upper limit amount and valid period.

In Step S74, in the user terminal 13, the input unit 25 of the touch panel display 23 acquires the purchased ticket ID, upper limit amount, and valid period selected by the user performing touch operation on the purchased ticket ID list screen.

In Step S75, the user terminal 13 waits for performing the processing until proximity communication starts by the user waving the card 14.

In Step S76, the card 14 determines whether or not the card 14 has been waved over the user terminal 13 by the user, and waits for performing the processing until determining to have been waved over the user terminal 13. Then, when the user waves the card 14 to be associated over the user terminal 13, the card 14 determines to have been waved over the user terminal 13, and the processing proceeds to Step S77.

In Step S77, the card 14 to be associated is captured by the user terminal 13, proximity communication is performed between the user terminal 13 and the card 14, and the identification number IDm stored in the storage unit 31 of the card 14 is transmitted from the card 14 to the user terminal 13.

In Step S78, in the user terminal 13, the proximity communication unit 22 acquires the identification number IDm transmitted from the card 14 in Step S77. Then, the network communication unit 21 transmits the user ID, the identification number IDm, the purchased ticket ID, the upper limit amount, and the valid period to the authentication settlement proxy server 15 via the network 12, and requests association of the card 14 waved by the user.

In Step S79, in the authentication settlement proxy server 15, the network communication unit 41 acquires the user ID, the identification number IDm, the purchased ticket ID, the upper limit amount, and the valid period transmitted from the user terminal 13 in Step S78. Then, the card authentication processing unit 43 searches for the continuous settlement information linked to the purchased ticket ID acquired by the network communication unit 41, records the upper limit amount, start date and time, and valid period of the continuous settlement information, and associates the identification number IDm.

In Step S80, in the authentication settlement proxy server 15, the network communication unit 41 transmits, to the user terminal 13 via the network 12, a result (OK/NG) of the association of the card 14 performed in Step S79 and the continuous settlement information.

In Step S81, in the user terminal 13, the network communication unit 21 acquires the continuous settlement information transmitted from the authentication settlement proxy server 15 in Step S80. Then, the display unit 24 of the touch panel display 23 displays the continuous settlement information screen (refer to Fig. 17 described above) presenting the continuous settlement information acquired by the network communication unit 21. Thereafter, for example, when the continuous settlement information screen is closed in response to the user performing touch operation on the close button in the continuous settlement information screen, the card association processing ends.

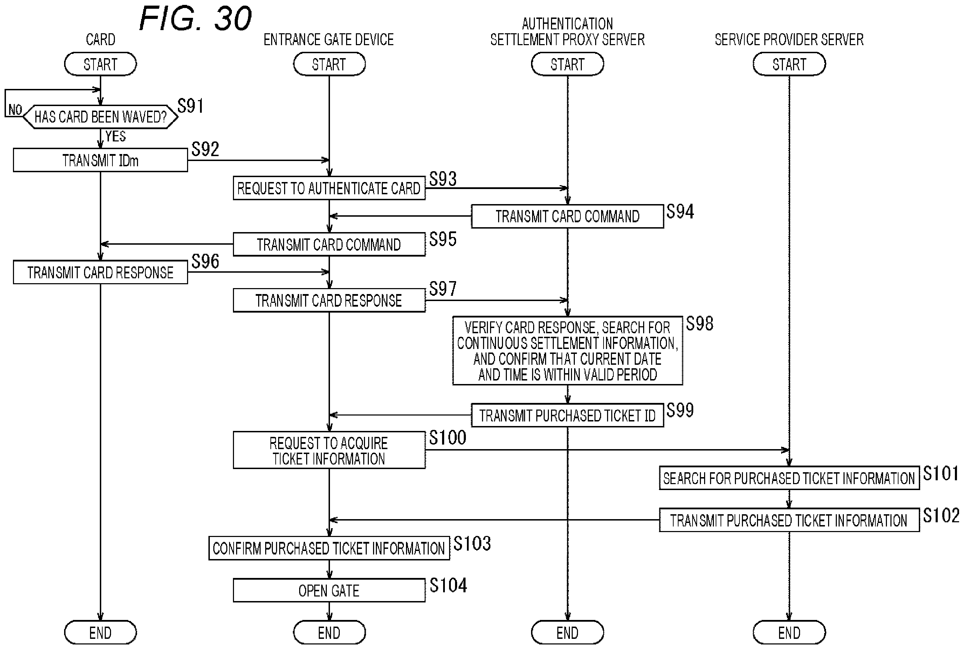

Fig. 30 illustrates a flowchart describing entrance gate passage processing. For example, the entrance gate passage processing is performed among the card 14, the authentication settlement proxy server 15, the service provider server 16, and the entrance gate device 18.

In Step S91, the card 14 determines whether or not the card 14 has been waved over the entrance gate device 18 by the user, and waits for performing the processing until determining to have been waved over the entrance gate device 18. Then, in a case where the card 14 determines to have been waved over the entrance gate device 18, the processing proceeds to Step S92.

In Step S92, proximity communication is performed between the entrance gate device 18 and the card 14, and an identification number IDm stored in the storage unit 31 of the card 14 is transmitted from the card 14 to the entrance gate device 18.

In Step S93, in the entrance gate device 18, the proximity communication unit 72 acquires the identification number IDm transmitted from the card 14 in Step S92. Then, the network communication unit 71 transmits the identification number IDm to the authentication settlement proxy server 15 via the network 12, and requests the authentication settlement proxy server 15 to authenticate the card 14.

In Step S94, in the authentication settlement proxy server 15, the network communication unit 41 acquires the identification number IDm transmitted from the entrance gate device 18 in Step S93. Then, the card authentication processing unit 43 supplies the network communication unit 41 with a card command for authenticating the identification number IDm of the card 14, the identification number IDm being acquired by the network communication unit 41. In response to this, the network communication unit 41 transmits the card command to the entrance gate device 18 via the network 12.

In Step S95, in the entrance gate device 18, the network communication unit 71 acquires the card command transmitted from the authentication settlement proxy server 15 in Step S94. Then, the proximity communication unit 72 transmits the card command acquired by the network communication unit 71 to the card 14 by proximity communication.

In Step S96, the card 14 transmits a card response to the card command transmitted from the entrance gate device 18 in Step S95.

In Step S97, in the entrance gate device 18, the proximity communication unit 72 acquires the card response transmitted from the card 14 in Step S96. Then, the network communication unit 71 transmits the card response to the authentication settlement proxy server 15 via the network 12.

In Step S98, in the authentication settlement proxy server 15, the network communication unit 41 acquires the card response transmitted from the entrance gate device 18 in Step S97. Here, processing of transmitting or receiving the card command and the card response in order to authenticate the card 14 (Steps S94 to S97) may be repeatedly performed a plurality of times depending on the card 14.

Moreover, in Step S98, in the authentication settlement proxy server 15, the card authentication processing unit 43 verifies the card response acquired by the network communication unit 41. Then, the card authentication processing unit 43 searches the database 44, and specifies, as a search result, continuous settlement information linked to the identification number IDm acquired by the network communication unit 41 in Step S94. Then, the card authentication processing unit 43 confirms that a current date and time is within the valid period registered in the specified continuous settlement information. That is, in a case where a date and time obtained by adding the valid period to the start date and time registered in the continuous settlement information is later than the current date and time (disclosure date and time + valid period > current date and time), it can be confirmed that the current date and time is within the valid period registered in the specified continuous settlement information.

In Step S99, in the authentication settlement proxy server 15, the network communication unit 41 transmits, to the entrance gate device 18 via the network 12, the purchased ticket ID registered in the continuous settlement information specified by the card authentication processing unit 43 in Step S98.

In Step S100, in the entrance gate device 18, the network communication unit 71 acquires the purchased ticket ID transmitted from the authentication settlement proxy server 15 in Step S99. Then, the network communication unit 71 transmits the purchased ticket ID to the service provider server 16 via the network 12, and requests the service provider server 16 to acquire the purchased ticket information.

In Step S101, in the service provider server 16, the network communication unit 51 acquires the purchased ticket ID transmitted from the entrance gate device 18 in Step S100. Then, the ticket management processing unit 52 searches the database 55 on the basis of the purchased ticket ID acquired by the network communication unit 51, and reads the purchased ticket information linked to the purchased ticket ID.

In Step S102, in the service provider server 16, the network communication unit 51 transmits, to the entrance gate device 18 via the network 12, the purchased ticket information read from the database 55 by the ticket management processing unit 52 in Step S101.

In Step S103, in the entrance gate device 18, the network communication unit 71 acquires the purchased ticket information transmitted from the service provider server 16 in Step S102, and confirms the purchased ticket information. Thereafter, in Step S104, the gate mechanism 73 opens the gate, by which the user can pass through the gate, and the entrance gate passage processing ends.

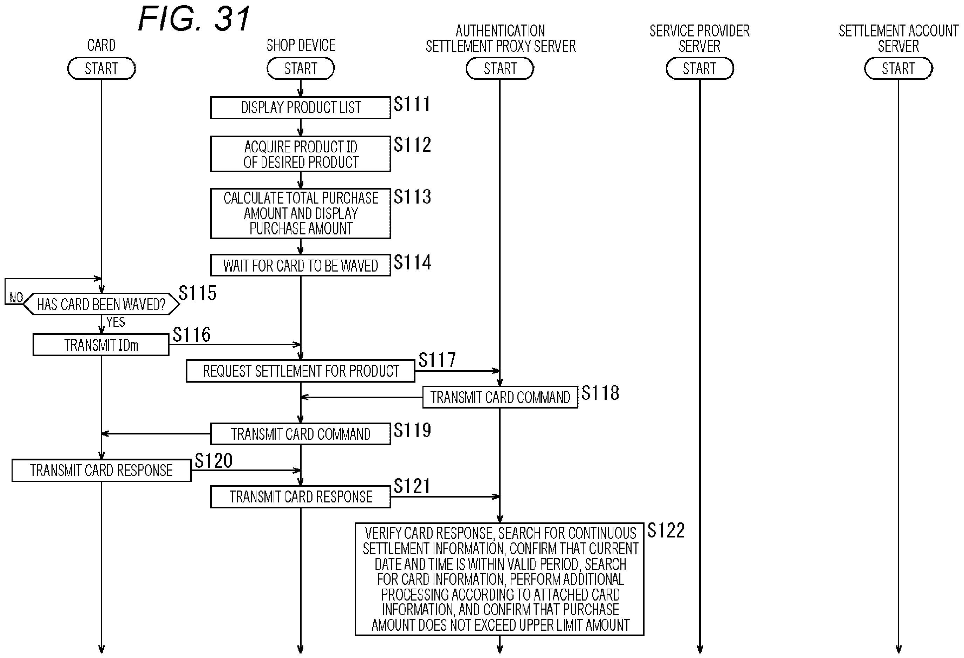

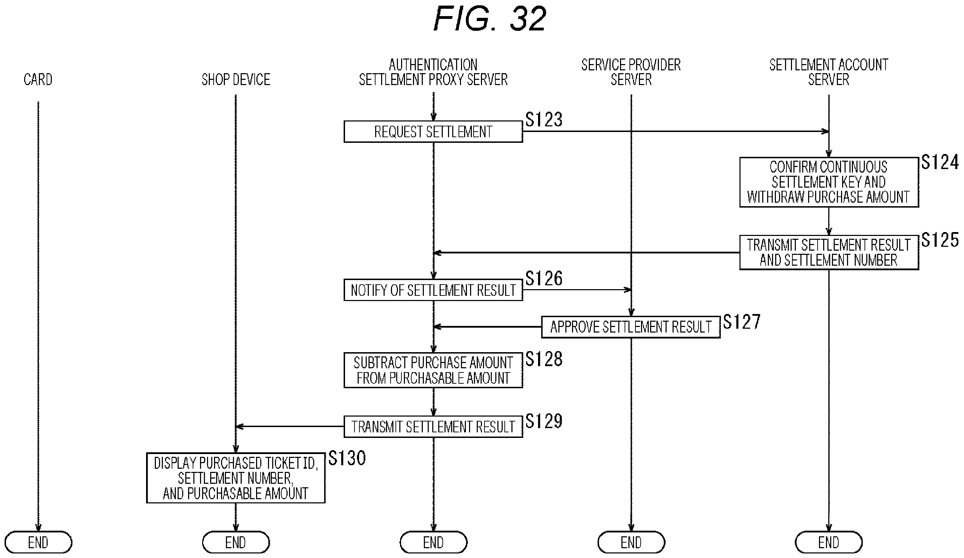

Figs. 31 and 32 illustrate a flowchart describing product purchase processing at a shop. For example, the product purchase processing at the shop is performed among the card 14, the authentication settlement proxy server 15, the service provider server 16, the settlement account server 17, and the shop device 19.

In Step S111, in the shop device 19, the display unit 85 of the touch panel display 84 displays the product list screen (refer to Fig. 18 described above) presenting products to be purchased by the user. With this arrangement, the user can perform touch operation on the product list screen displayed in the display unit 85 of the touch panel display 84 to select a desired product.

In Step S112, in the shop device 19, the input unit 86 of the touch panel display 84 acquires a product ID of the product desired by the user performing touch operation on the product list screen.

In Step S113, the shop device 19 calculates a total purchase amount on the basis of the product ID acquired by the input unit 86 in Step S112, and the purchase amount is displayed on the product list screen displayed in the display unit 85 of the touch panel display 84.

Then, when the user performs touch operation on a proceed-to-accounting button on the product list screen, the processing proceeds to S114, and the shop device 19 waits for performing the processing until proximity communication starts by the user waving the card 14.

In Step S115, the card 14 determines whether or not the card 14 has been waved over the shop device 19 by the user, and waits for performing the processing until determining to have been waved over the shop device 19. Then, when the user waves the associated card 14 over the shop device 19, the card 14 determines to have been waved over the shop device 19, and the processing proceeds to Step S116.

In Step S116, the associated card 14 is captured by the shop device 19, proximity communication is performed between the shop device 19 and the card 14, and the identification number IDm stored in the storage unit 31 of the card 14 is transmitted from the card 14 to the shop device 19.

In Step S117, in the shop device 19, the proximity communication unit 82 acquires the identification number IDm transmitted from the card 14 in Step S116. Then, the network communication unit 81 transmits the identification number IDm, the product ID list, and the purchase amount to the authentication settlement proxy server 15 via the network 12, and requests a settlement for the product.

In Step S118, in the authentication settlement proxy server 15, the network communication unit 41 acquires the identification number IDm, product ID list, and purchase amount transmitted from the shop device 19 in Step S117. Then, the card authentication processing unit 43 supplies the network communication unit 41 with a card command for authenticating the identification number IDm of the card 14, the identification number IDm being acquired by the network communication unit 41. In response to this, the network communication unit 41 transmits the card command to the shop device 19 via the network 12.

In Step S119, in the shop device 19, the network communication unit 81 acquires the card command transmitted from the authentication settlement proxy server 15 in Step S118. Then, the proximity communication unit 82 transmits the card command acquired by the network communication unit 81 to the card 14 by proximity communication.

In Step S120, the card 14 transmits the card response to the card command transmitted from the shop device 19 in Step S119.

In Step S121, in the shop device 19, the proximity communication unit 82 acquires the card response transmitted from the card 14 in Step S120. Then, the network communication unit 81 transmits the card response to the authentication settlement proxy server 15 via the network 12.

In Step S122, in the authentication settlement proxy server 15, the network communication unit 41 acquires the card response transmitted from the shop device 19 in Step S121. In the authentication settlement proxy server 15, the card authentication processing unit 43 verifies the card response acquired by the network communication unit 41. Then, the card authentication processing unit 43 searches the database 44, and specifies, as a search result, continuous settlement information linked to the identification number IDm acquired by the network communication unit 41 in Step S118. Then, similarly to Step S98 in Fig. 30 described above, the card authentication processing unit 43 confirms that the current date and time is within the valid period registered in the specified continuous settlement information.

Moreover, the card authentication processing unit 43 searches the database 44 and specifies, as a search result, the card information linked to the identification number IDm. Then, according to the attached card information registered in the card information, the settlement proxy processing unit 42 performs additional processing in a case where additional processing is necessary. For example, a discount, point granting, or the like as a benefit of the card 14 is assumed to be provided as the additional processing. Thereafter, the settlement proxy processing unit 42 confirms that the purchase amount (purchase amount after additional processing in a case where the additional processing has been performed) does not exceed the upper limit amount.

In Step S123, in the authentication settlement proxy server 15, the network communication unit 41 transmits, to the settlement account server 17 via the network 12, the purchase amount (purchase amount after the additional processing), the attached card information, and the continuous settlement key, and requests the settlement account server 17 for a settlement.

In Step S124, in the settlement account server 17, the network communication unit 61 acquires the purchase amount (purchase amount after the additional processing), attached card information, and continuous settlement key transmitted from the authentication settlement proxy server 15 in Step S123. Then, the settlement management processing unit 62 confirms the continuous settlement key acquired by the network communication unit 61, and withdraws the purchase amount (purchase amount after the additional processing).

In Step S125, in the settlement account server 17, the network communication unit 61 transmits, to the authentication settlement proxy server 15 via the network 12, a settlement result (OK/NG) obtained by the settlement in Step S124 and a settlement number specifying the settlement.

In Step S126, in the authentication settlement proxy server 15, the network communication unit 41 transmits the purchased ticket ID, the product ID list, the purchase amount (purchase amount after the additional processing), the shop ID, and the settlement number to the service provider server 16 via the network 12, and notifies of the settlement result.

In Step S127, in the service provider server 16, the network communication unit 51 acquires the purchased ticket ID, the product ID list, the purchase amount (purchase amount after the additional processing), the shop ID, and the settlement number. Then, the network communication unit 51 notifies the authentication settlement proxy server 15 that the settlement result has been approved.

In Step S128, in the authentication settlement proxy server 15, the settlement proxy processing unit 42 subtracts the purchase amount (purchase amount after the additional processing) from the purchasable amount.

In Step S129, in the authentication settlement proxy server 15, the network communication unit 41 transmits the settlement result (OK/NG), the purchased ticket ID, the settlement number, and the purchasable amount to the shop device 19 via the network 12.

In Step S130, in the shop device 19, the network communication unit 81 acquires the settlement result (OK/NG), purchased ticket ID, settlement number, and purchasable amount transmitted from the authentication settlement proxy server 15 in Step S129. Then, the display unit 85 of the touch panel display 84 displays the purchased ticket ID/settlement number/purchasable amount screen (refer to Fig. 19 described above) presenting the purchased ticket ID, the settlement number, and the purchasable amount. Thereafter, for example, when the purchased ticket ID/settlement number/purchasable amount screen is closed in response to the user performing touch operation on the close button in the purchased ticket ID/settlement number/purchasable amount screen, the product purchase processing at the shop ends.

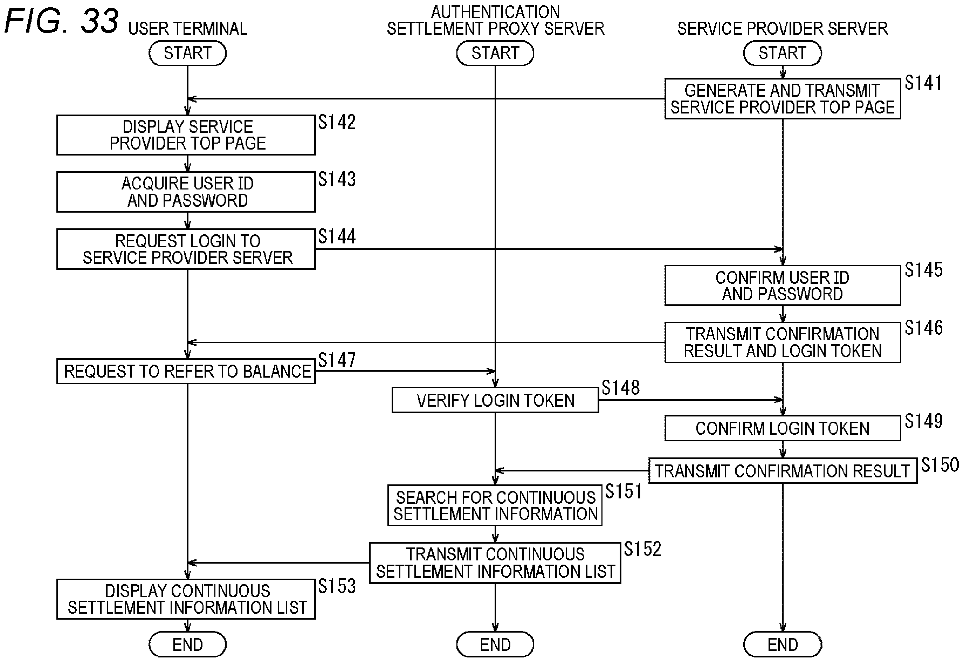

Fig. 33 illustrates a flowchart describing balance reference processing for upper limit amount. For example, the balance reference processing for upper limit amount is performed among the user terminal 13, the authentication settlement proxy server 15, and the service provider server 16.

For example, in Steps S141 to S145, processing similar to the processing in Steps S21 to S25 in Fig. 25 is performed. Thereafter, in Step S146, in the service provider server 16, the network communication unit 51 transmits, to the user terminal 13 via the network 12, a result (OK/NG) of confirmation of the user ID and password acquired by the user authentication processing unit 53 in Step S145. At this time, in a case where a confirmation result (OK) indicating a successful login is acquired, the network communication unit 51 also transmits the login token.

In Step S174, in the user terminal 13, the network communication unit 21 acquires the login token via the network 12 in a case where the login to the service provider server 16 is successful. Then, the network communication unit 21 transmits the user ID acquired in Step S143 and the login token to the authentication settlement proxy server 15 via the network 12, and requests the authentication settlement proxy server 15 for a balance inquiry.

In Step S148, in the authentication settlement proxy server 15, the network communication unit 41 acquires, via the network 12, the user ID and login token transmitted from the user terminal 13 in Step S147. Moreover, in order to verify the login token, the network communication unit 41 transmits, to the service provider server 16 via the network 12, the login token and login ID for logging in from the authentication settlement proxy server 15 to the service provider server 16.

In Step S149, in the service provider server 16, the network communication unit 51 acquires the login ID and the login token via the network 12, and the user authentication processing unit 53 confirms the login token. Then, the network communication unit 51 transmits a result (OK/NG) of confirmation of the login token by the user authentication processing unit 53 to the authentication settlement proxy server 15 via the network 12.

In Step S151, in the authentication settlement proxy server 15, the network communication unit 41 acquires the confirmation result of the login token transmitted from the service provider server 16 in Step S150. Then, in a case of a confirmation result (OK) indicating successful confirmation of a login token, the settlement proxy processing unit 42 searches for continuous settlement information registered in the database 44 on the basis of the user ID acquired by the network communication unit 41 in Step S148.

In Step S152, in the authentication settlement proxy server 15, the network communication unit 41 transmits, to the user terminal 13 via the network 12, a list of the continuous settlement information searched for by the settlement proxy processing unit 42 in Step S151.

In Step S153, in the user terminal 13, the network communication unit 21 acquires the list of the continuous settlement information, the list being transmitted from the authentication settlement proxy server 15 in Step S152. Then, the display unit 24 of the touch panel display 23 displays the continuous settlement information list screen (refer to Fig. 20 described above) for presenting the list of the continuous settlement information acquired by the network communication unit 21. Thereafter, for example, when the continuous settlement information list screen is closed in response to the user performing touch operation on the close button in the continuous settlement information list screen, the balance reference processing for upper limit amount ends.

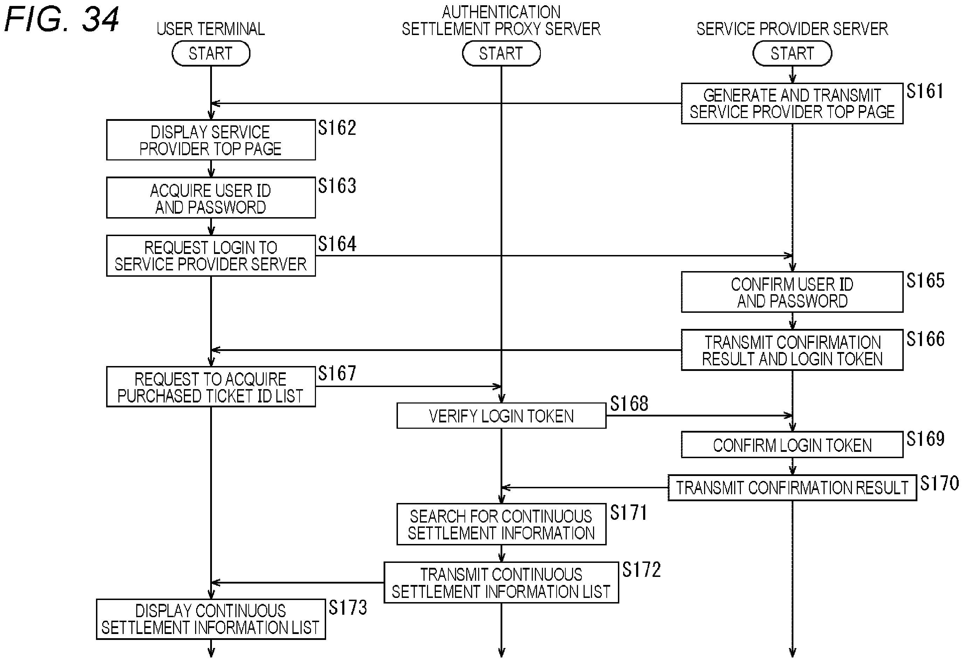

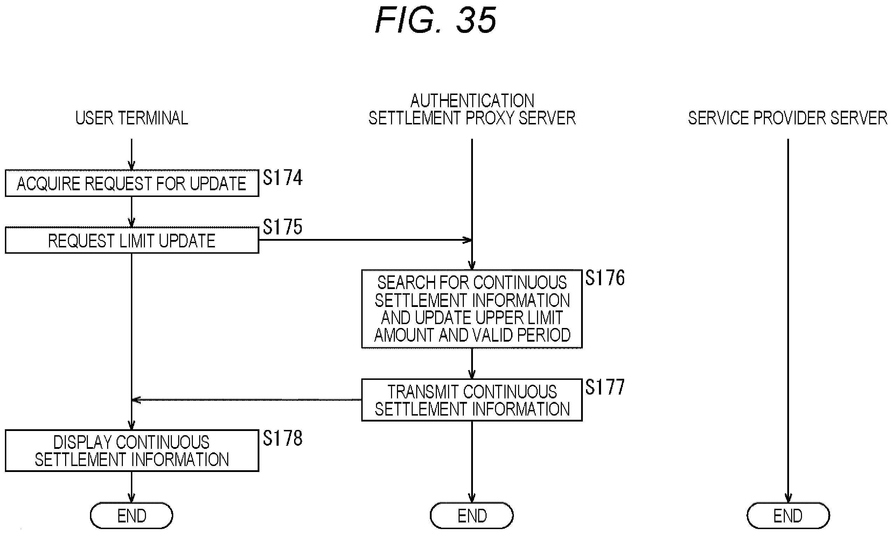

Figs. 34 and 35 illustrate a flowchart describing limit update processing. For example, the limit update processing is performed among the user terminal 13, the authentication settlement proxy server 15, and the service provider server 16.

For example, in Steps S161 to S166, processing similar to the processing in Steps S141 to S146 in Fig. 33 is performed. Thereafter, in Step S167, in the user terminal 13, the network communication unit 21 acquires the login token via the network 12 in a case where the login to the service provider server 16 is successful. Then, the network communication unit 21 transmits the user ID acquired in Step S163 and the login token to the authentication settlement proxy server 15 via the network 12, and requests the authentication settlement proxy server 15 to acquire a purchased ticket ID list.

Then, in Steps S167 to S172, processing similar to the processing in Steps S147 to S152 in Fig. 33 is performed. Thereafter, in Step S173, in the user terminal 13, the network communication unit 21 acquires the list of the continuous settlement information, the list being transmitted from the authentication settlement proxy server 15 in Step S172. Then, the display unit 24 of the touch panel display 23 displays the continuous settlement information list (update) screen (refer to Fig. 21 described above) for presenting the list of the continuous settlement information acquired by the network communication unit 21.

With this arrangement, the user can perform touch operation on the continuous settlement information list (update) screen displayed in the display unit 24 of the touch panel display 23 to select a ticket ID, upper limit amount, and valid period desired to be updated and can request update of a limit.

In Step S174, in the user terminal 13, the input unit 25 of the touch panel display 23 acquires the request to update a limit on the purchased ticket ID, upper limit amount, and valid period that the user wishes to update by the user performing touch operation on the continuous settlement information list (update) screen.

In Step S175, in the user terminal 13, the network communication unit 21 transmits the ticket ID, the upper limit amount, and the valid period to the authentication settlement proxy server 15 via the network 12, and requests the authentication settlement proxy server 15 to update the limit.

In Step S176, in the authentication settlement proxy server 15, the network communication unit 41 acquires the ticket ID, upper limit amount, and valid period transmitted from the user terminal 13 in Step S175. Then, the settlement proxy processing unit 42 searches for the continuous settlement information linked to the purchased ticket ID acquired by the network communication unit 41, and updates the upper limit amount and valid period of the continuous settlement information.

In Step S177, in the authentication settlement proxy server 15, the network communication unit 41 transmits, to the user terminal 13 via the network 12, the continuous settlement information updated by the card authentication processing unit 43 in S176.

In Step S178, in the user terminal 13, the network communication unit 21 acquires the continuous settlement information transmitted from the authentication settlement proxy server 15 in Step S177. Then, the display unit 24 of the touch panel display 23 displays the continuous settlement information (update) screen (refer to Fig. 20 described above) for presenting the continuous settlement information acquired by the network communication unit 21. Thereafter, for example, when the continuous settlement information (update) screen is closed in response to the user performing touch operation on the close button in the continuous settlement information (update) screen, the limit update processing ends.

Note that, although the card 14 is associated and used for payment in the present embodiment, other various objects such as a wearable device, such as a so-called smart watch, or a key holder in which an IC chip is embedded can be associated and used for payment.

### <Configuration example of computer>

Next, a series of processing (information processing method) described above can be performed by hardware or software. In a case where a series of processing is performed by software, a program constituting the software is installed on a general-purpose computer, or the like.

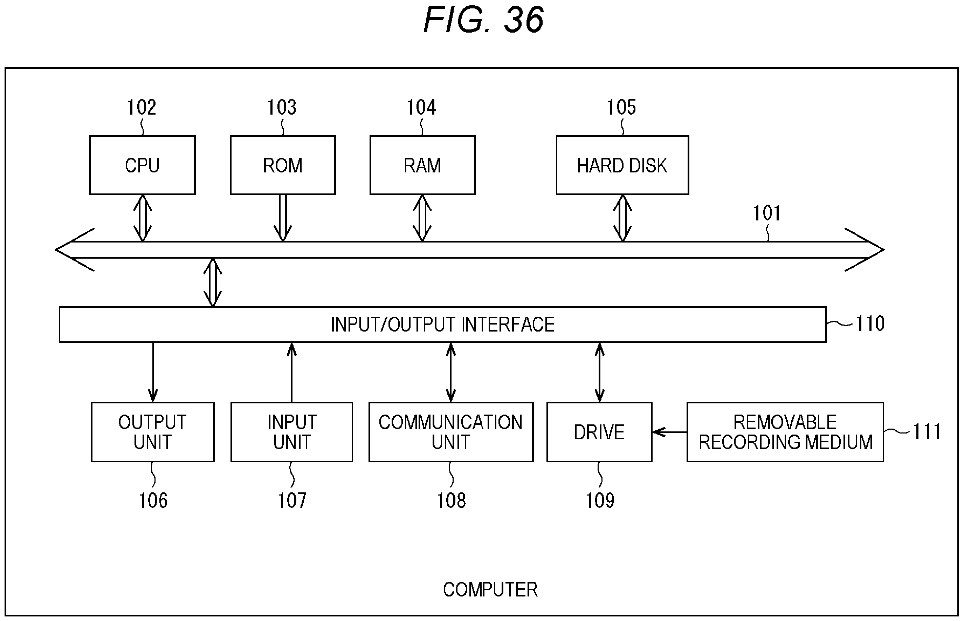

Fig. 36 is a block diagram illustrating a configuration example of an embodiment of a computer on which a program for executing the above-described series of processing is installed.

The program can be previously recorded on a hard disk 105 or ROM 103 as a recording medium incorporated in the computer.

Alternatively, the program can be stored (recorded) in a removable recording medium 111 driven by a drive 109. Such a removable recording medium 111 can be provided as so-called packaged software. Here, examples of the removable recording medium 111 include a flexible disk, a compact disc read only memory (CD-ROM), a magneto optical (MO) disk, a digital versatile disc (DVD), a magnetic disk, and a semiconductor memory, for example.

Note that a program can be installed on a computer from the removable recording medium 111 as described above, as well as can be downloaded to the computer via a communication network or a broadcasting network and installed on the hard disk 105 incorporated. That is, for example, the program can be wirelessly transferred from a download site to the computer via an artificial satellite for digital satellite broadcasting, or transferred to the computer by wire via a network such as a local area network (LAN) or the Internet.

The computer has a built-in central processing unit (CPU) 102, and an input/output interface 110 is connected to the CPU 102 via a bus 101.

When a command is input by a user operating an input unit 107, or the like, via the input/output interface 110, the CPU 102 executes a program stored on the read only memory (ROM) 103 accordingly. Alternatively, the CPU 102 loads a program stored on the hard disk 105 into a random access memory (RAM) 104 and executes the program.

With this arrangement, the CPU 102 performs processing according to the above-described flowchart or processing performed according to the above configuration described with the block diagram. Then, as necessary, the CPU 102 outputs a processing result from an output unit 106, transmits the processing result from a communication unit 108, causes the hard disk 105 to record the processing result, or the like, via the input/output interface 110, for example.

Note that the input unit 107 includes a keyboard, a mouse, a microphone, or the like. Furthermore, the output unit 106 includes a liquid crystal display (LCD), a speaker, or the like.

Here, in the present specification, processing performed by a computer according to the program does not necessarily have to be performed in time series in an order described as a flowchart. That is, processing performed by the computer according to a program also includes processing that is executed in parallel or individually (for example, parallel processing or object processing).

Furthermore, the program may be processed by one computer (processor) or may be subjected to distributed processing by a plurality of computers. Moreover, the program may be transferred to a distant computer and executed.

Moreover, in the present specification, the system means a set of a plurality of components (devices, modules (parts), or the like) without regard to whether or not all the components are in the same housing. Therefore, a plurality of devices housed in separate housings and connected via a network, and one device housing a plurality of modules in one housing are both systems.

Furthermore, for example, a configuration described as one device (or processing unit) may be divided and configured as a plurality of devices (or processing units). To the contrary, the configurations described above as a plurality of devices (or processing units) may be collectively configured as one device (or processing unit). Furthermore, needless to say, a configuration other than the configurations described above may be added to a configuration of each device (or each processing unit). Moreover, if a configuration and operation of an entire system are substantially the same, a part of a configuration of a certain device (or processing unit) may be included in a configuration of another device (or another processing unit).

Furthermore, for example, the present technology can have one configuration of cloud computing in which one function is shared and processed jointly by a plurality of devices via a network.

Furthermore, for example, the above-described programs can be executed in any device. In that case, the device is only required to have a necessary function (function block, or the like) so that necessary information can be acquired.

Furthermore, for example, each step described in the above-described flowchart can be executed by one device, or can be executed by being shared by a plurality of devices. Moreover, in a case where a plurality of pieces of processing is included in one step, the plurality of pieces of processing included in the one step can be executed by being shared by a plurality of devices, in addition to being executed by one device. In other words, a plurality of pieces of processing included in one step can be executed as a plurality of steps. To the contrary, pieces of processing described as a plurality of steps can be collectively executed as one step.

Note that, the program executed by the computer may be a program in which processing of steps describing the program is executed in time series in an order described in the present specification, or a program in which the processing may be executed in parallel, or individually at a necessary timing such as when a call is made. That is, unless there is a contradiction, the processing of each step may be executed in an order different from the order described above. Moreover, the processing of steps describing the program may be executed in parallel with processing of another program, or may be executed in combination with processing of another program.

Note that the plurality of present technologies described in the present specification can be implemented independently as a single piece unless there is a contradiction. Needless to say, any of the plurality of present techniques can be used in combination. For example, a part or all of the present technology described in any of the embodiments can be implemented in combination with a part or all of the present technology described in another embodiment. Furthermore, a part or all of the present technology described above can be implemented in combination with another technology not described above.

### <Example of configuration combination>

Note that the present technology can have the following configurations.
(1) An information processing device including
   an acquisition unit that acquires an upper limit amount set as an upper limit for payment at a time of purchase of a desired product or service, and identification information assigned to a payment object used when the payment is made, and
   a continuous settlement information processing unit that performs processing of associating the identification information with and recording the upper limit amount on continuous settlement information that continuously records information regarding a settlement for the payment.
(2) The information processing device according to (1),
   in which the continuous settlement information processing unit records, in the continuous settlement information, a purchasable amount obtained by payment of a predetermined purchase amount being made, the payment subtracting the purchase amount from the upper limit amount.
(3) The information processing device according to (2),
   in which the acquisition unit acquires, from a device of a shop that sells the product or the service, a purchase amount at a time of purchase of the product or the service, and the identification information acquired from the payment object at the time of the purchase, and
   the continuous settlement information processing unit confirms that the purchasable amount recorded in the continuous settlement information with which the identification information is associated is not exceeded.
(4) The information processing device according to (3),
   in which the continuous settlement information processing unit performs, on the basis of attached information registered in the information regarding the payment object along with the identification information, predetermined additional processing at the time of purchase of the product or the service.
(5) The information processing device according to any one of (1) to (4),
   in which the acquisition unit acquires an update upper limit amount that updates a limit on the upper limit amount, and
   the continuous settlement information processing unit updates the continuous settlement information by increasing the upper limit amount according to the update upper limit amount.
(6) The information processing device according to any one of (1) to (5),
   in which the acquisition unit acquires a start date and time indicating a date and time at which a purchased ticket purchased to enter a place where the payment object is to be used is validated, and a valid period indicating a period of validity from the start date and time, and
   the continuous settlement information processing unit records the start date and time and the valid period in the continuous settlement information along with the identification information.
(7) The information processing device according to (6),
   in which the acquisition unit acquires an update valid period that updates a limit on the valid period, and
   the continuous settlement information processing unit updates the continuous settlement information by extending the valid period according to the update valid period.
(8) The information processing device according to (6) or (7),
   in which the acquisition unit acquires, from a device of an entrance gate disposed at an entrance for entering the place, the identification information acquired from the payment object at a time of passing through the entrance gate, and
   the continuous settlement information processing unit confirms that a current date and time is within the valid period recorded in the continuous settlement information with which the identification information is associated.
(9) An information processing method including, by an information processing device,
   acquiring an upper limit amount set as an upper limit for payment at a time of purchase of a desired product or service, and identification information assigned to a payment object used when the payment is made, and
   performing processing of associating the identification information with and recording the upper limit amount on continuous settlement information that continuously records information regarding a settlement for the payment.
(10) A program for causing a computer of an information processing device to execute information processing including
   acquiring an upper limit amount set as an upper limit for payment at a time of purchase of a desired product or service, and identification information assigned to a payment object used when the payment is made, and
   performing processing of associating the identification information with and recording the upper limit amount on continuous settlement information that continuously records information regarding a settlement for the payment.
(11) An information processing terminal including
   an acquisition unit that acquires an upper limit amount set as an upper limit for payment at a time of purchase of a desired product or service, and identification information assigned to a payment object used when the payment is made, and
   a request unit that requests an information processing device that makes a settlement as a proxy by using the payment object to perform processing of associating the identification information with and recording the upper limit amount on continuous settlement information that continuously records information regarding a settlement for the payment.
(12) The information processing terminal according to (11), the information processing terminal further including
   a proximity communication unit that performs proximity communication with the payment object, and reads, along with the identification information, a uniform resource locator (URL) that specifies a web page of a settlement service provided by the information processing device,
   in which the request unit transmits the identification information and the URL to the information processing device and requests to activate a web page that inquires a balance for the upper limit amount.
(13) The information processing terminal according to (11), the information processing terminal further including
   a display unit that displays, to make a settlement for payment, a user interface that allows to select a desired settlement service from among a plurality of settlement services.
(14) An information processing method including, by an information processing terminal,
   acquiring an upper limit amount set as an upper limit for payment at a time of purchase of a desired product or service, and identification information assigned to a payment object used when the payment is made, and
   requesting an information processing device that makes a settlement as a proxy by using the payment object to perform processing of associating the identification information with and recording the upper limit amount on continuous settlement information that continuously records information regarding a settlement for the payment.
(15) A program for causing a computer of an information processing terminal to execute information processing including
   acquiring an upper limit amount set as an upper limit for payment at a time of purchase of a desired product or service, and identification information assigned to a payment object used when the payment is made, and
   requesting an information processing device that makes a settlement as a proxy by using the payment object to perform processing of associating the identification information with and recording the upper limit amount on continuous settlement information that continuously records information regarding a settlement for the payment.

Note that, the present embodiment is not limited to the above-described embodiment, and various changes can be made without departing from the scope of the present disclosure. Furthermore, the effects described herein are only examples, and the effects of the present technology are not limited to these effects. Additional effects may also be obtained.

### REFERENCE SIGNS LIST

- 11: Information processing system
- 12: Network
- 13: User terminal
- 14: Card
- 15: Authentication settlement proxy server
- 16: Service provider server
- 17: Settlement account server
- 18: Entrance gate device
- 19: Shop device
- 21: Network communication unit
- 22: Proximity communication unit
- 23: Touch panel display
- 24: Display unit
- 25: Input unit
- 31: Storage unit
- 41: Network communication unit
- 42: Settlement proxy processing unit
- 43: Card authentication processing unit
- 44: Database
- 51: Network communication unit
- 52: Ticket management processing unit
- 53: User authentication processing unit
- 54: Web-page generation unit
- 55: Database
- 61: Network communication unit
- 62: Settlement management processing unit
- 63: User authentication processing unit
- 64: Web-page generation unit
- 65: Database
- 71: Network communication unit
- 72: Proximity communication unit
- 73: Gate mechanism
- 74: Touch panel display
- 81: Network communication unit
- 82: Proximity communication unit
- 83: Storage unit
- 84: Touch panel display

## Claims

1. An information processing device comprising:
an acquisition unit that acquires an upper limit amount set as an upper limit for payment at a time of purchase of a desired product or service, and identification information assigned to a payment object used when the payment is made; and
a continuous settlement information processing unit that performs processing of associating the identification information with and recording the upper limit amount on continuous settlement information that continuously records information regarding a settlement for the payment.

2. The information processing device according to claim 1,
wherein the continuous settlement information processing unit records, in the continuous settlement information, a purchasable amount obtained by payment of a predetermined purchase amount being made, the payment subtracting the purchase amount from the upper limit amount.

3. The information processing device according to claim 2,
wherein the acquisition unit acquires, from a device of a shop that sells the product or the service, a purchase amount at a time of purchase of the product or the service, and the identification information acquired from the payment object at the time of the purchase, and
the continuous settlement information processing unit confirms that the purchasable amount recorded in the continuous settlement information with which the identification information is associated is not exceeded.

4. The information processing device according to claim 3,
wherein the continuous settlement information processing unit performs, on a basis of attached information registered in the information regarding the payment object along with the identification information, predetermined additional processing at the time of purchase of the product or the service.

5. The information processing device according to claim 1,
wherein the acquisition unit acquires an update upper limit amount that updates a limit on the upper limit amount, and
the continuous settlement information processing unit updates the continuous settlement information by increasing the upper limit amount according to the update upper limit amount.

6. The information processing device according to claim 1,
wherein the acquisition unit acquires a start date and time indicating a date and time at which a ticket purchased to enter a place where the payment object is to be used is validated, and a valid period indicating a period of validity from the start date and time, and
the continuous settlement information processing unit records the start date and time and the valid period in the continuous settlement information along with the identification information.

7. The information processing device according to claim 6,
wherein the acquisition unit acquires an update valid period that updates a limit on the valid period, and
the continuous settlement information processing unit updates the continuous settlement information by extending the valid period according to the update valid period.

8. The information processing device according to claim 6,
wherein the acquisition unit acquires, from a device of an entrance gate disposed at an entrance for entering the place, the identification information acquired from the payment object at a time of passing through the entrance gate, and
the continuous settlement information processing unit confirms that a current date and time is within the valid period recorded in the continuous settlement information with which the identification information is associated.

9. An information processing method comprising, by an information processing device:
acquiring an upper limit amount set as an upper limit for payment at a time of purchase of a desired product or service, and identification information assigned to a payment object used when the payment is made; and
performing processing of associating the identification information with and recording the upper limit amount on continuous settlement information that continuously records information regarding a settlement for the payment.

10. A program for causing a computer of an information processing device to execute information processing comprising:
acquiring an upper limit amount set as an upper limit for payment at a time of purchase of a desired product or service, and identification information assigned to a payment object used when the payment is made; and
performing processing of associating the identification information with and recording the upper limit amount on continuous settlement information that continuously records information regarding a settlement for the payment.

11. An information processing terminal comprising:
an acquisition unit that acquires an upper limit amount set as an upper limit for payment at a time of purchase of a desired product or service, and identification information assigned to a payment object used when the payment is made; and
a request unit that requests an information processing device that makes a settlement as a proxy by using the payment object to perform processing of associating the identification information with and recording the upper limit amount on continuous settlement information that continuously records information regarding a settlement for the payment.

12. The information processing terminal according to claim 11, the information processing terminal further comprising
a proximity communication unit that performs proximity communication with the payment object, and reads, along with the identification information, a uniform resource locator (URL) that specifies a web page of a settlement service provided by the information processing device,
wherein the request unit transmits the identification information and the URL to the information processing device and requests to activate a web page that inquires a balance for the upper limit amount.

13. The information processing terminal according to claim 11, the information processing terminal further comprising
a display unit that displays, to make a settlement for payment, a user interface that allows to select a desired settlement service from among a plurality of settlement services.

14. An information processing method comprising, by an information processing terminal:
acquiring an upper limit amount set as an upper limit for payment at a time of purchase of a desired product or service, and identification information assigned to a payment object used when the payment is made; and
requesting an information processing device that makes a settlement as a proxy by using the payment object to perform processing of associating the identification information with and recording the upper limit amount on continuous settlement information that continuously records information regarding a settlement for the payment.

15. A program for causing a computer of an information processing terminal to execute information processing comprising:
acquiring an upper limit amount set as an upper limit for payment at a time of purchase of a desired product or service, and identification information assigned to a payment object used when the payment is made; and
requesting an information processing device that makes a settlement as a proxy by using the payment object to perform processing of associating the identification information with and recording the upper limit amount on continuous settlement information that continuously records information regarding a settlement for the payment.
